# EUROPEAN PATENT APPLICATION

(11) **EP 3 009 976 A1**
(43) Date of publication of application: **20.04.2016**
(21) Application number: 14810200.7
(22) Date of filing: 25.04.2014
(51) Int. Cl.: G06Q 30/02, G06Q 30/06

(54) **INFORMATION PROCESSING DEVICE, INFORMATION PROCESSING METHOD, PROGRAM, AND INFORMATION PROCESSING SYSTEM**

(30) Priority: 11.06.2013 JP 2013122744
(71) Applicant: Sony Corporation, Tokyo 108-0075 (JP)
(72) Inventor: ITO, Yoshinobu, Tokyo 108-0075 (JP)
(74) Representative: Witte, Weller & Partner Patentanwälte mbB
(86) International application number: PCT/JP2014/061763
(87) International publication number: WO 2014/199735

(57) **Abstract**

There is provided an information processing apparatus including: a specification unit, in a case where information related to a purchase has been acquired from a purchase processing apparatus, which specifies indirect identification information associated with communication identification information corresponding to communication with the purchase processing apparatus by using association information in which the communication identification information identifying communication and the indirect identification information indirectly showing a user are associated; and a processing unit which causes first information including the specified indirect identification information to be transmitted to a service provision apparatus providing a service in a virtual space. In a case where second information corresponding to a process for the transmitted first information has been acquired from the service provision apparatus, the processing unit causes the second information to be transmitted to the purchase processing apparatus.

## Description

### Technical Field

The present disclosure relates to an information processing apparatus, an information processing method, a program, and an information processing system.

### Background Art

Technology has been developed, in the case where a purchase of a product or service has been performed in a shop of a real space or the like, which is capable of providing benefits to a user performing this purchase. The technology disclosed in the following Patent Literature 1 can be included, for example, as technology for providing benefits to a user performing a purchase.

### Citation List

### Patent Literature

Patent Literature 1: JP 2011-164824A

### Summary of Invention

### Technical Problem

For example, in the technology disclosed in Patent Literature 1, by using an IC identifier which identifies an Integrated Circuit (IC) chip, installed in a user apparatus possessed by a user performing a process related to a purchase of a product or service in a shop of a real space or the like, benefits corresponding to a user are given to the user of this apparatus. Therefore, for example, by using the technology disclosed in Patent Literature 1, it is possible to be able to provide benefits to a user performing a purchase.

However, since an IC identifier does not guarantee that it is a unique identifier, in the case where an IC identifier is used, there will be the possibility of causing the benefits provided to a user to not be benefits corresponding to this user. Further, for example, in the case where this user apparatus has been handed over to a third party at the time when the user has sold the user apparatus or the like, there may be the occurrence of the benefits corresponding to this user being given to the third party, for example, by using the IC identifier. Accordingly, in the case where an IC identifier is used, it is possible for information of a user to be illegally handed over to a third party.

The present disclosure proposes a new and improved information processing apparatus, information processing method, program, and information processing system capable of providing information corresponding to a purchase of a product or service in a real space to a purchase processing apparatus performing a process relating to the purchase in the real space.

### Solution to Problem

According to the present disclosure, there is provided an information processing apparatus including: a specification unit, in a case where information related to a purchase of a product or service in a real space has been acquired from a purchase processing apparatus performing a process relating to the purchase, which specifies indirect identification information associated with communication identification information corresponding to communication with the purchase processing apparatus by using association information in which the communication identification information identifying communication and the indirect identification information indirectly showing a user are associated; and a processing unit which causes first information including the specified indirect identification information to be transmitted to a service provision apparatus providing a service in a virtual space. In a case where second information corresponding to a process for the transmitted first information has been acquired from the service provision apparatus, the processing unit causes the second information to be transmitted to the purchase processing apparatus.

According to the present disclosure, there is provided an information processing method including: a step, in a case where information related to a purchase of a product or service in a real space has been acquired from a purchase processing apparatus performing a process relating to the purchase, which specifies indirect identification information associated with communication identification information corresponding to communication with the purchase processing apparatus by using association information in which the communication identification information identifying communication and the indirect identification information indirectly showing a user are associated; a step which causes first information including the specified indirect identification information to be transmitted to a service provision apparatus providing a service in a virtual space, and a step, in a case where second information corresponding to a process for the transmitted first information has been acquired from the service provision apparatus, which causes the second information to be transmitted to the purchase processing apparatus.

According to the present disclosure, there is provided a program for causing a computer to execute: a step, in a case where information related to a purchase of a product or service in a real space has been acquired from a purchase processing apparatus performing a process relating to the purchase, which specifies indirect identification information associated with communication identification information corresponding to communication with the purchase processing apparatus by using association information in which the communication identification information identifying communication and the indirect identification information indirectly showing a user are associated; a step which causes first information including the specified indirect identification information to be transmitted to a service provision apparatus providing a service in a virtual space, and a step, in a case where second information corresponding to a process for the transmitted first information has been acquired from the service provision apparatus, which causes the second information to be transmitted to the purchase processing apparatus.

According to the present disclosure, there is provided an information processing system including: an information processing apparatus; and a service provision apparatus which provides a service in a virtual space. The information processing apparatus includes an information processing apparatus side specification unit, in a case where information related to a purchase of a product or service in a real space has been acquired from a purchase processing apparatus performing a process relating to the purchase, which specifies indirect identification information associated with communication identification information corresponding to communication with the purchase processing apparatus by using first association information in which the communication identification information identifying communication and the indirect identification information indirectly showing a user are associated, and an information processing apparatus side processing unit which causes first information including the specified indirect identification information to be transmitted to the service provision apparatus. In a case where second information corresponding to a process for the transmitted first information has been acquired from the service provision apparatus, the information processing apparatus side processing unit causes the second information to be transmitted to the purchase processing apparatus. The service provision apparatus includes a service provision apparatus side specification unit which specifies a user corresponding to the indirect identification information included in the first information by using second association information in which the indirect identification information and direct identification information directly showing a user are associated, and a service provision apparatus side processing unit which performs a process related to a service corresponding to the specified user, and causes the second information corresponding to the process to be transmitted to the information processing apparatus.

### Advantageous Effects of Invention

According to the present disclosure, information corresponding to a purchase of a product or service in a real space can be provided to a purchase processing apparatus performing a process relating to the purchase in the real space.

### Brief Description of Drawings

[FIG. 1] FIG. 1 is an explanatory diagram for describing an outline of the processes in an information processing system according to the present embodiment.
[FIG. 2] FIG. 2 is an explanatory diagram which shows an example of a configuration of the information processing system according to the present embodiment.
[FIG. 3] FIG. 3 is an explanatory diagram for describing an example of the processes in a purchase processing apparatus and a shop side apparatus.
[FIG. 4] FIG. 4 is an explanatory diagram for describing an example of the processes in a purchase processing apparatus and a shop side apparatus.
[FIG. 5] FIG. 5 is an explanatory diagram for describing an example of the processes in the information processing system according to the present embodiment.
[FIG. 6] FIG. 6 is an explanatory diagram for describing an example of the processes in the information processing system according to the present embodiment.
[FIG. 7] FIG. 7 is an explanatory diagram for describing an example of the processes in the information processing system according to the present embodiment.
[FIG. 8] FIG. 8 is an explanatory diagram for describing an example of the processes in the information processing system according to the present embodiment.
[FIG. 9] FIG. 9 is an explanatory diagram for describing an example of the processes in the information processing system according to the present embodiment.
[FIG. 10] FIG. 10 is an explanatory diagram for describing an example of the processes in the information processing system according to the present embodiment.
[FIG. 11] FIG. 11 is an explanatory diagram for describing an example of the processes in the information processing system according to the present embodiment.
[FIG. 12] FIG. 12 is an explanatory diagram for describing an example of the processes in the information processing system according to the present embodiment.
[FIG. 13] FIG. 13 is an explanatory diagram for describing an example of the processes in the information processing system according to the present embodiment.
[FIG. 14] FIG. 14 is an explanatory diagram for describing an example of the processes in the information processing system according to the present embodiment.
[FIG. 15] FIG. 15 is an explanatory diagram for describing an example of the processes in the information processing system according to the present embodiment.
[FIG. 16] FIG. 16 is an explanatory diagram for describing an example of the processes in the information processing system according to the present embodiment.
[FIG. 17] FIG. 17 is an explanatory diagram for describing an example of the processes in the information processing system according to the present embodiment.
[FIG. 18] FIG. 18 is a block diagram which shows an example of a configuration of an information processing apparatus according to the present embodiment.
[FIG. 19] FIG. 19 is an explanatory diagram which shows an example of a hardware configuration of the information processing apparatus according to the present embodiment.
[FIG. 20] FIG. 20 is a block diagram which shows an example of a configuration of a service provision apparatus according to the present embodiment.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Hereinafter, the description will be made in the following order.
1. The information processing system according to the present embodiment
2. Configuration examples of the apparatuses which constitute the information processing system according to the present embodiment
3. The program according to the present embodiment

### (The information processing system according to the present embodiment)

Before a configuration of each of the apparatuses which constitute an information processing system according to the present embodiment is described, first, the processes in an information processing system according to the present embodiment will be described.

### [1] Outline of the processes in the information processing system according to the present embodiment

### [1-1] Provision example of information corresponding to a purchase in a real space, implemented by using the information processing system according to the present embodiment

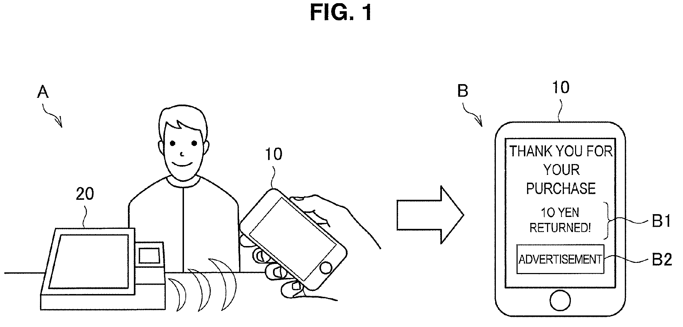

FIG. 1 is an explanatory diagram for describing an outline of the processes in the information processing system according to the present embodiment. A shown in FIG. 1 shows an example of the case where a user performs a purchase of a product or service in a real space. Further, B shown in FIG. 1 shows an information example corresponding to a purchase in a real space, which is provided to a purchase processing apparatus performing a process relating to the purchase of a product or service in a real space, as a result of the purchase of a product or service being performed. Here, the purchase processing apparatus according to the present embodiment is called, for example, an apparatus capable of performing a process relating to a purchase of a product or service.

For example, as shown in A of FIG. 1, a user causes communication to be performed, for example, between the purchase processing apparatus represented by the reference numeral 10 in FIG. 1, and an apparatus provided in a shop of a real space (hereinafter, shown as a "shop side apparatus") represented by the reference numeral 20 in FIG. 1. Then, a purchase of a product or service is performed, by performing a process relating to the purchase of a product or service, such as a settlement process using an electronic value (money, or data having a value equivalent to that of money), for example, between the shop side apparatus 20 and the purchase processing apparatus 10.

Here, contactless communication by Near Field Communication (NFC) can be included as communication between the purchase processing apparatus 10 and the shop side apparatus 20. In the case where contactless communication by NFC is performed, one of the shop side apparatus 20 and the purchase processing apparatus 10 serves as a reader/writer (or, an interrogation device) which independently transmits carrier waves, and the other serves as a response device. Note that, the system of communication between the purchase processing apparatus 10 and the shop side apparatus 20 is not limited to that described above. For example, wireless communication of an arbitrary system or wired communication of an arbitrary system may be performed between the purchase processing apparatus 10 and the shop side apparatus 20. Hereinafter, a case will be included, as an example, in which contactless communication by NFC is performed between the purchase processing apparatus 10 and the shop side apparatus 20, and the shop side apparatus 20 serves as a reader/writer.

Further, while a smartphone is shown in FIG. 1 as an example of the purchase processing apparatus 10 according to the present embodiment, the purchase processing apparatus 10 according to the present embodiment is not limited to a smartphone. Further, while a Point of Sale (POS) apparatus is shown in FIG. 1 as an example of the shop side apparatus 20 according to the present embodiment, the shop side apparatus 20 according to the present embodiment is not limited to a POS apparatus.

When a purchase of a product or service is performed, the purchase processing apparatus 10 transmits information related to a purchase obtained as a result of a process relating to the purchase, for example, to an information processing apparatus according to the present embodiment which constitutes the information processing system according to the present embodiment. Also, information corresponding to a purchase in a real space is provided to the purchase processing apparatus 10, such as shown in B of FIG. 1, for example, by the information processing system according to the present embodiment.

Here, wireless communication such as wireless communication via a base station or network can be included, for example, as communication between the purchase processing apparatus 10 and an information processing apparatus according to the present embodiment. Note that, the communication between the purchase processing apparatus 10 and an information processing apparatus according to the present embodiment is not limited to that described above. For example, it is also possible for the purchase processing apparatus 10 and an information processing apparatus according to the present embodiment to perform communication via a wired network.

Further, data which shows a purchase price, a purchase time, a purchase location or the like can be included, for example, as information related to a purchase according to the present embodiment. An example of information related to a purchase according to the present embodiment will be described below.

Further, data which shows benefits given to a user such as shown in B1 of B of FIG. 1, data which shows an advertisement to a user such as shown in B2 of B of FIG. 1 or the like can be included, for example, as information corresponding to a purchase in a real space according to the present embodiment.

Information corresponding to a purchase in a real space is provided to the purchase processing apparatus 10, such as shown in B of FIG. 1, for example, by using the information processing system according to the present embodiment.

As described above, in the case where benefits are provided to a user performing a purchase by having an IC identifier used, an undesirable situation may occur, such as "the benefits provided to a user not being benefits corresponding to this user" or "the possibility of information of a user being illegally handed over to a third party".

Accordingly, in the information processing system according to the present embodiment, information corresponding to a purchase in a real space is provided to the purchase processing apparatus 10, by using communication identification information identifying communication, and indirect identification information indirectly showing a user, without the information processing apparatus according to the present embodiment having an IC identifier.

Here, the communication identification information according to the present embodiment is data capable of identifying communication. A cookie (Hyper Transfer Protocol (HTTP) cookie) can be included, for example, as the communication identification information according to the present embodiment. Note that, the communication identification information according to the present embodiment is not limited to a cookie, and may be arbitrary data capable of identifying communication. Hereinafter, a case will be included, as an example, in which the communication identification information according to the present embodiment is a cookie.

Further, the indirect identification information according to the present embodiment is data which indirectly shows a user, and is not capable of directly specifying a user. A unique ID can be included, for example, as the indirect identification information according to the present embodiment. The indirect identification information according to the present embodiment is generated, for example, in the information processing apparatus according to the present embodiment. Note that, the indirect identification information according to the present embodiment is not limited to an ID, and may be arbitrary unique data. Hereinafter, a case will be included, as an example, in which the indirect identification information according to the present embodiment is a unique ID, and there will be cases where the indirect identification information according to the present embodiment is shown as a "Tracking ID".

### [1-2] Example of a configuration example and the processes of the information processing system according to the present embodiment

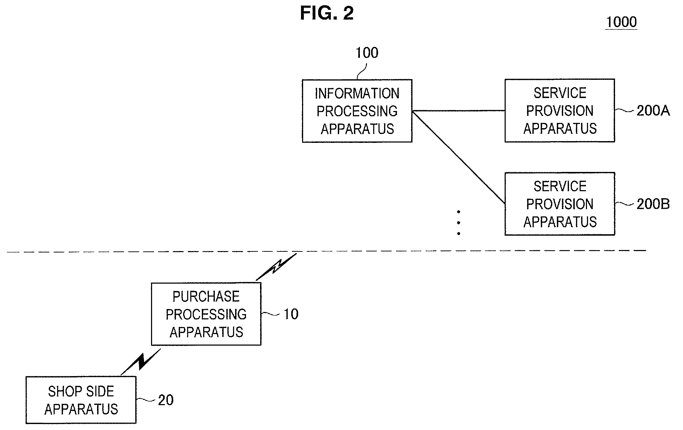

FIG. 2 is an explanatory diagram which shows an example of a configuration of an information processing system 1000 according to the present embodiment. Here, in FIG. 2, the purchase processing apparatus 10 and the shop side apparatus 20 performing the processes described with reference to FIG. 1 are shown together.

The information processing system 1000 has, for example, an information processing apparatus 100, and one or two or more service provision apparatuses 200. An example is shown in FIG. 2 in which the information processing system 1000 has a plurality of service provision apparatuses 200 called service provision apparatuses 200A, 200B, ... and the like. Hereinafter, there will be cases where the service provision apparatuses 200A, 200B, ... and the like are collectively shown as a "service provision apparatus 200". Note that, examples of the configurations of the information processing apparatus 100 and the service provision apparatus 200 will be described below.

### [1-2-1] Processes in the information processing apparatus 100 (processes relating to an information processing method according to the present embodiment)

The information processing apparatus 100 performs, for example, (1) a specification process and (2) a communication control process shown below.

### (1) Specification process

In the case where information related to a purchase has been acquired from the purchase processing apparatus 10, the information processing apparatus 100 specifies indirect identification information associated with communication identification information corresponding to communication with the purchase processing apparatus 10. The information processing apparatus 100 specifies indirect identification information associated with communication identification information corresponding to communication with the purchase processing apparatus 10, for example, by using association information (hereinafter, shown as "first association information") in which the communication identification information and the indirect identification information are associated, which is stored in a storage unit (which will be described below), an external recording medium or the like.

Here, a table or database in which the communication identification information and the indirect identification information are associated can be included, for example, as the first association information according to the present embodiment. Note that, the first association information according to the present embodiment is not limited to that described above, and may be arbitrary data (or, a data group) capable of associating the communication identification information and the indirect identification information.

The information processing apparatus 100 specifies indirect identification information associated with communication identification information corresponding to communication with the purchase processing apparatus 10, for example, by using communication identification information corresponding to communication with the purchase processing apparatus 10, and retrieving indirect identification information associated with this communication identification information from the first association information according to the present embodiment.

More specifically, the information processing apparatus 100 performs processes relating to the following first example to third example, for example, as the specification process according to the present embodiment. Note that, specific examples of the specification process according to the present embodiment will be described below.

### (1-1) First example of the specification process

In the case where communication identification information has been acquired together with information related to a purchase from the purchase processing apparatus 10, the information processing apparatus 100 retrieves communication identification information matching with the acquired communication identification information from the first association information. Further, in the case where communication identification information matching with the acquired communication identification information has been retrieved from the first association information, the information processing apparatus 100 specifies indirect identification information associated with the retrieved communication identification information as indirect identification information associated with communication identification information corresponding to communication with the purchase processing apparatus 10.

### (1-2) Second example of the specification process

In the case where communication identification information has been acquired together with information related to a purchase from the purchase processing apparatus 10, the information processing apparatus 100 retrieves communication identification information matching with the acquired communication identification information from the first association information. Further, in the case where communication identification information matching with the acquired communication identification information has not been retrieved from the first association information, the information processing apparatus 100 newly generates indirect identification information. Then, the generated indirect identification information is specified as indirect identification information associated with communication identification information corresponding to communication with the purchase processing apparatus 10.

### (1-3) Third example of the specification process

In the case where communication identification information has not been acquired together with information related to a purchase from the purchase processing apparatus 10, the information processing apparatus 100 newly generates communication identification information and indirect identification information. Then, the information processing apparatus 100 specifies the generated indirect identification information as indirect identification information associated with communication identification information corresponding to communication with the purchase processing apparatus 10.

### (2) Communication control process

The information processing apparatus 100 causes information (hereinafter, shown as "first information") including the indirect identification information specified in the process (specification process) of the above described (1) to be transmitted to the service provision apparatus 200.

Note that, the information included in the first information, which the information processing apparatus 100 has caused to be transmitted to the service provision apparatus 200, is not limited to indirect identification information.

For example, it is possible for the information processing apparatus 100 to cause the first information, which further includes information related to a purchase, to be transmitted to the service provision apparatus 200. In the case where the first information, which further includes information related to a purchase, is transmitted to the service provision apparatus 200, it becomes possible for the service provision apparatus 200 to perform processes by using the information related to a purchase included in the first information.

Further, in the case where additional information has been acquired together with information related to a purchase from the purchase processing apparatus 10, it is possible for the information processing apparatus 100 to cause the first information, which further includes additional information, for example, to be transmitted to the service provision apparatus 200. In the case where the first information, which further includes additional information, is transmitted to the service provision apparatus 200, it becomes possible for the service provision apparatus 200 to perform processes by using the additional information included in the first information.

Here, arbitrary data other than information related to a purchase, such as data which shows an inventory of products, data which shows a customer number visiting the shop, or data which shows the price of individual products or services, can be included, for example, as the additional information according to the present embodiment. In the case where additional information has been acquired by communication with the shop side apparatus 20, for example, the purchase processing apparatus 10 transmits the additional information together with information related to a purchase to the information processing apparatus 100.

Further, in the case where information (hereinafter, shown as "second information") corresponding to a process for the transmitted first information has been acquired from the service provision apparatus 200, the information processing apparatus 100 causes the second information to be transmitted to the purchase processing apparatus 10.

Here, information (hereinafter, shown as "service information") corresponding to a result of a process relating to a service in the service provision apparatus, such as data which shows benefits given to a user such as shown in B1 of B of FIG. 1, can be included, for example, as information included in the second information according to the present embodiment. Further, data which shows an advertisement to a user such as shown in B2 of B of FIG. 1, or data which shows a recommendation to a user, may be included, for example, in information included in the second information according to the present embodiment.

The information processing apparatus 100 causes the first information according to the present embodiment or the second information according to the present embodiment, for example, to be transmitted to a communication unit (which will be described below) included in the information processing apparatus 100, or an external communication device connected to the information processing apparatus 100. The information processing apparatus 100 causes the first information according to the present embodiment or the second information according to the present embodiment to be transmitted to the communication unit (which will be described below) or the like, for example, by transferring data which shows the first information according to the present embodiment or the second information according to the present embodiment, and a control signal which includes an address of a transmission destination, a transmission instruction or the like, to the communication unit (which will be described below) or the like.

Further, in the case of causing the second information to be transmitted to the purchase processing apparatus 10, at the time when the specification process relating to the third example shown in the above described (1-3) is performed in the process (specification process) of the above described (1), the information processing apparatus 100 causes the generated communication identification information to be transmitted to the purchase processing apparatus 10. In the case of causing the second information to be transmitted to the purchase processing apparatus 10, that is, in the case of performing a response to information related to a purchase, it becomes possible to identify communication from this point onwards with the purchase processing apparatus 10, by having the newly generated communication identification information transmitted to the purchase processing apparatus 10, and using the newly generated communication identification information, for example, in the information processing apparatus 100.

The information processing apparatus 100 performs, for example, the process (specification process) of the above described (1) and the process (communication control process) of the above described (2).

Here, the second information according to the present embodiment is acquired from the service provision apparatus 200, as a result of having a process performed based on the first information according to the present embodiment, in the service provision apparatus 200. Further, since indirect identification information specified in the process (specification process) of the above described (1) is included in the first information according to the present embodiment, it can be said that the second information according to the present embodiment is information corresponding to a purchase in a real space using the purchase processing apparatus 10.

Therefore, the information processing apparatus 100 can provide information corresponding to a purchase in a real space to the purchase processing apparatus 10, for example, by performing the process (specification process) of the above described (1) and the process (communication control process) of the above described (2).

Note that, the processes in the information processing apparatus 100 according to the present embodiment are not limited to the process (specification process) of the above described (1) and the process (communication control process) of the above described (2). For example, it is also possible for the information processing apparatus 100 to perform (3) an information management process shown below.

### (3) Information management process

The information processing apparatus 100 selectively performs each of a process which updates the first association information according to the present embodiment and a process which records information related to the acquired information.

### (3-1) Examples of the process which updates the first association information

The information processing apparatus 100 performs one or two or more processes, from among a process relating to a first example shown below to a process relating to a fourth example shown below, for example, as a process which updates the first association information.

### (3-1-1) First example of the process which updates the first association information

In the case where information related to indirect identification information different to the indirect identification information included in the first information transmitted in the process (communication control process) of the above described (2) is included in the acquired second information according to the present embodiment, for example, the information processing apparatus 100 updates the first association information.

Here, data which shows indirect identification information corresponding to a same user as that of the indirect identification information included in the first information can be included, for example, as "information related to indirect identification information different to the indirect identification information included in the transmitted first information" according to the present embodiment. In the case where indirect identification information different to the indirect identification information included in the transmitted first information is included in the second information according to the present embodiment, for example, the information processing apparatus 100 updates the first association information.

Further, a process which associates the indirect identification information that is included in the transmitted first information and included in the first association information, with indirect identification information different to the indirect identification information included in the first information, in which information related to the above described different indirect identification information is shown, can be included, as example, as the process relating to an update of the first association information in the above described case. The information processing apparatus 100 associates the indirect identification information included in the transmitted first information, and the indirect identification information different to the indirect identification information included in the first information, in which information related to the above described different indirect identification information is shown, by a relational database. Note that, the above described association process according to the present embodiment is not limited to a process which uses a relational database, and it is possible for the information processing apparatus 100 to perform an arbitrary process capable of an association.

Note that, the process relating to an update of the first association information in the above described case is not limited to the above described association process.

For example, in the above described case, the information processing apparatus 100 may update the first association information, by making invalid the indirect identification information included in the transmitted first information, which is included in the first association information, in the first association information. Here, deleting information related to the corresponding indirect identification information (for example, indirect identification information, and communication identification information associated with this indirect identification information. Hereinafter, the same will apply) from the first association information, and setting a flag which shows invalidation for information related to the corresponding indirect identification information in the first association information, can be included, for example, as a method which makes invalid the indirect identification information in the first association information.

### (3-1-2) Second example of the process which updates the first association information

In the case where the specification process relating to the second example shown in the above described (1-2) has been performed in the process (specification process) of the above described (1), the information processing apparatus 100 updates the first association information. The information processing apparatus 100 associates and records the acquired communication identification information, and the indirect identification information generated in the specification process relating to the second example, for example, with the first association information.

### (3-1-3) Third example of the process which updates the first association information

In the case where the specification process relating to the third example shown in the above described (1-3) has been performed in the process (specification process) of the above described (1), the information processing apparatus 100 updates the first association information. The information processing apparatus 100 associates and records the communication identification information generated in the specification process relating to the third example, and the indirect identification information generated in the specification process relating to the third example, for example, with the first association information.

### (3-1-4) Fourth example of the process which updates the first association information

In the case where a validity period is provided in the communication identification information included in the first association information, and in the case where the provided validity period has expired, for example, the information processing apparatus 100 updates the first association information. The information processing apparatus 100 makes invalid, for example, the communication identification information for which the validity period has expired and which is included in the first association information, and the indirect identification information associated with the communication identification information for which the validity period has expired.

Here, deleting information related to the corresponding indirect identification information from the first association information, and setting a flag which shows invalidation for information related to the corresponding indirect identification information in the first association information, can be included, for example, as a method which makes invalid the indirect identification information in the first association information and the communication identification information associated with the indirect identification information.

### (3-2) Examples of the process which records information related to the acquired information

The information processing apparatus 100 performs one or both of the processes, from among a process relating to a first example shown below and a process relating to a second example shown below, for example, as a process which records information related to the acquired information.

### (3-2-1) First example of the process which records information related to the acquired information

In the case where information related to a purchase has been acquired, for example, the information processing apparatus 100 associates and records the indirect identification information specified in the process (specification process) of the above described (1), and the acquired information related to a purchase.

The information processing apparatus 100 associates the specified indirect identification information and the acquired information of a purchase, for example, by newly generating or updating data of an arbitrary form capable of associating and storing the indirect identification information and the information related to a purchase, such as a table or a database.

Here, the above described table, the above described database or the like may be stored in a storage unit (which will be described later) included in the information processing apparatus 100, for example, or may be stored in an external recording medium connected to the information processing apparatus 100, or a recording medium included in an external apparatus capable of communicating via a network (or directly). In the case where the above described table or the like is stored in a storage unit (which will be described later) or the above described external recording medium, the information processing apparatus 100 causes the indirect identification information and the information related to a purchase to be associated and recorded in the storage unit (which will be described later) or the like, by transferring the indirect identification information, the information related to a purchase, and a recording instruction to the storage unit (which will be described later) or the like. Further, in the case where the above described table or the like is stored in the above described external apparatus, the information processing apparatus 100 causes the indirect identification information and the information related to a purchase to be associated and recorded in the above described external apparatus, for example, by causing the communication unit (which will be described below) or the like to transfer the indirect identification information, the information related to a purchase, and a recording instruction to the above described external apparatus.

### (3-2-2) Second example of the process which records information related to the acquired information

For example, in the case where service information according to the present embodiment is included in the second information acquired from the service apparatus 200, the information processing apparatus 100 associates and records the indirect identification information specified in the process (specification process) of the above described (1), the acquired information related to a purchase, and the service information.

Similar to the process which records information related to acquired information relating to the above described first example, for example, the information processing apparatus 100 associates the specified indirect identification information, the acquired information related to a purchase, and the service information, by newly generating or updating data of an arbitrary form capable of associating and storing the indirect identification information, the information related to a purchase, and the service information, such as a table or a database.

### [1-2-2] Processes in the service provision apparatus 200

The service provision apparatus 200 is an apparatus which provides a service in a virtual space. An Internet shopping service, an arbitrary service relating to a product or service sold in a real space or the like can be included, for example, as a service in a virtual space provided in the service provision apparatus 200. It is possible for the service provision apparatus 200 to serve as, for example, a so-called cyber-shop. Note that, there may be various combinations, such as a same business operator, a business operator relating to a related company or the like, or a business operator performing coordination from the viewpoint of business, for example, as a business operator who provides a product or service in a real space, or a business operator who provides a service in a virtual space by using the service provision apparatus 200.

The service provision apparatus 200 performs, for example, (I) a specification process and (II) an execution process shown below.

### (I) Specification process

The service provision apparatus 200 specifies a user corresponding to the indirect identification information included in the first information acquired from the information processing apparatus 100, for example, by using association information (hereinafter, shown as "second association information") in which the indirect identification information and direct identification information directly showing a user are associated.

Here, the direct identification information according to the present embodiment is data which directly shows a user. Data which shows personal information of a user (for example, the name, age, gender, address or the like of the user) can be included, for example, as the direct identification information according to the present embodiment.

Further, a table or database in which the indirect identification information and the direct identification information are associated can be included, for example, as the second association information according to the present embodiment. Note that, the second association information according to the present embodiment is not limited to that described above, and may be arbitrary data (or, a data group) capable of associating the indirect identification information and the direct identification information.

The information processing apparatus 100 specifies a user corresponding to the indirect identification information included in the acquired first information, for example, by using the indirect identification information included in the first information acquired from the information processing apparatus 100, and retrieving direct identification information associated with this indirect identification information from the second association information according to the present embodiment.

### (II) Execution process

The service provision apparatus 200 performs, for example, a process related to a service corresponding to a user specified in the process (specification process) of the above described (I). The service provision apparatus 200 performs a process related to a determined service, for example, by determining a service to be provided, by an arbitrary algorithm for a user who manages the service provision apparatus 200 (a service business operator who provides a service or the like).

Then, the service provision apparatus 200 causes the second information according to the present embodiment corresponding to a process related to a performed service to be transmitted to the information processing apparatus 100. The service provision apparatus 200 causes the second information according to the present embodiment to be transmitted, for example, to a communication unit (which will be described below) included in the service provision apparatus 200, or an external communication device connected to the service provision apparatus 200. The service provision apparatus 200 causes the second information according to the present embodiment to be transmitted to the communication unit (which will be described below) or the like, for example, by transferring data which shows the second information according to the present embodiment, and a control signal which includes an address of a transmission destination, a transmission instruction or the like, to the communication unit (which will be described below) or the like.

The service provision apparatus 200 performs, for example, the process (specification process) of the above described (I) and the process (execution process) of the above described (II).

The information processing system according to the present embodiment has an information processing apparatus 100 which performs processes such as those described above, and a service provision apparatus 200. Hereinafter, the processes in the information processing system according to the present embodiment will be described by including, as an example, the process in each of the apparatuses which constitute the information processing system 1000 shown in FIG. 2 (the information processing apparatus 100, the service provision apparatus 200), the purchase processing apparatus 10, and the shop side apparatus 20.

Further, hereinafter, an example of the processes in the information processing system according to the present embodiment will be described by including, as an example, the case where the communication identification information according to the present embodiment is a "cookie", and the indirect identification information according to the present embodiment is a "Tracking ID".

### [2] Specific examples of the processes in the information processing system according to the present embodiment

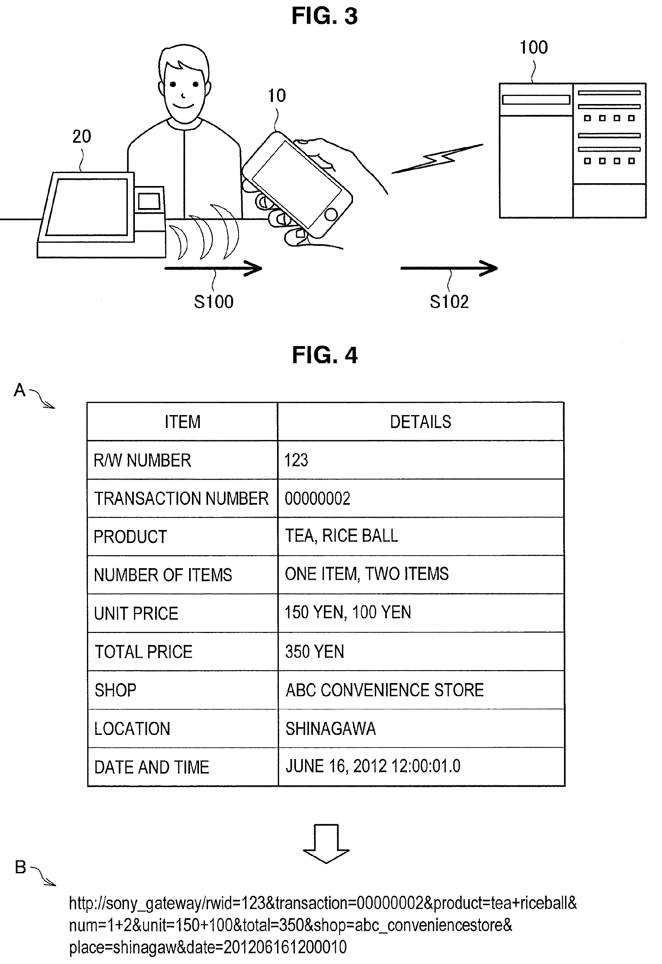

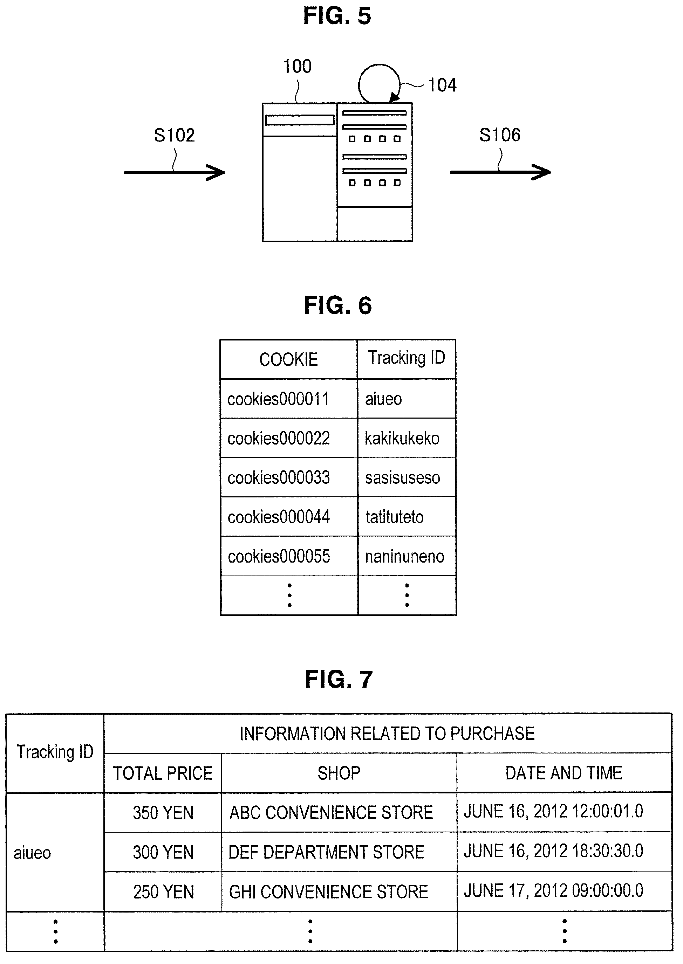

FIG. 3 and FIG. 4 are explanatory diagrams for describing an example of the processes in the purchase processing apparatus 10 and the shop side apparatus 20. Further, FIG. 5 to FIG. 17 are explanatory diagrams for describing an example of the processes in the information processing system 1000 according to the present embodiment.

### (i) Processes in the purchase processing apparatus 10 and the shop side apparatus 20 (FIG. 3, FIG. 4)

When a settlement process is completed, for example, the shop side apparatus 20 generates a Uniform Resource Locator (URL) in which information related to a purchase of a product or service has been embedded, and transmits the generated URL to the purchase processing apparatus 10 (S100).

FIG. 4 shows an example of a URL generated by the shop side apparatus 20. As shown in B of FIG. 4, for example, the shop side apparatus 20 generates a URL in which information related to a purchase such as shown in A of FIG. 4 has been embedded. Note that, it is needless to say that the URL in which information related to a purchase according to the present embodiment has been embedded is not limited to the form shown in B of FIG. 4.

The purchase processing apparatus 10 receiving the URL transmitted in step S100 accesses to the information processing apparatus 100, based on the received URL (S102).

Here, as shown in FIG. 4, information related to a purchase according to the present embodiment is embedded into the URL transmitted in step S100. Therefore, information related to a purchase is acquired by the information processing apparatus 100, by accessing to the information processing apparatus 100, based on the URL transmitted in step S100.

Further, while the purchase processing apparatus 10 automatically accesses to the information processing apparatus 100, in accordance with a reception of the URL transmitted from the shop side apparatus 20, the processes in the purchase processing apparatus 10 are not limited to those described above. For example, the purchase processing apparatus 10 may cause the received URL to be displayed on a display screen, and may access to the information processing apparatus 100 based on a user operation.

### (ii) Processes in the information processing apparatus 100 (FIG. 5 to FIG. 9)

The information processing apparatus 100 receiving access from the purchase processing apparatus 10 in step S102 specifies a Tracking ID, based on a cookie corresponding to the purchase processing apparatus 10 (S104).

In step S104, for example, the information processing apparatus 100 performs the specification process relating to the first example shown in the above described (1-1) to the specification process relating to the third example shown in the above described (1-3), by using the first association information according to the first embodiment. FIG. 6 shows an example of the first association information according to the first embodiment. As shown in FIG. 6, a cookie and a Tracking ID are associated one-to-one in the first association information according to the present embodiment.

### {A} The case where the specification process relating to the first example shown in the above described (1-1) is performed

For example, in the case where a cookie has been acquired together with information related to a purchase from the purchase processing apparatus 10, a Tracking ID associated with this cookie is retrieved from the first association information shown in FIG. 6, by using a cookie corresponding to communication with the purchase processing apparatus 10. Then, in the case where a cookie matching with the acquired cookie has been retrieved from the first association information shown in FIG. 6, the information processing apparatus 100 specifies the Tracking ID associated with the retrieved cookie as a Tracking ID associated with the cookie corresponding to communication with the purchase processing apparatus 10.

### {B} The case where the specification process relating to the second example shown in the above described (1-2) is performed: The case where an acquired cookie is an unknown cookie

For example, in the case where a cookie has been acquired together with information related to a purchase from the purchase processing apparatus 10, a Tracking ID associated with this cookie is retrieved from the first association information shown in FIG. 6, by using a cookie corresponding to communication with the purchase processing apparatus 10. Then, in the case where a cookie matching with the acquired cookie has not been retrieved from the first association information shown in FIG. 6, the information processing apparatus 100 newly generates a Tracking ID. Then, the generated Tracking ID is specified as a Tracking ID associated with the cookie corresponding to communication with the purchase processing apparatus 10.

Further, in the case where the specification process relating to the second example shown in the above described (1-2) is performed, the information processing apparatus 100 performs a process which updates the first association information relating to the second example shown in the above described (3-1-2), and associates and records the acquired cookie and the generated Tracking ID, with the first association information. At the time when the purchase processing apparatus 10 is accessed the next time, by having the information processing apparatus 100 perform a process which updates the first association information relating to the second example shown in the above described (3-1-2), there will be a high possibility that it becomes possible to specify a Tracking ID by the acquired cookie, by the specification process relating to the first example shown in the above described (1-1).

### {C} The case where the specification process relating to the third example shown in the above described (1-3) is performed: The case where a cookie has not been acquired

In the case where a cookie has not been acquired together with information related to a purchase from the purchase processing apparatus 10, the information processing apparatus 100 newly generates a cookie and a Tracking ID. Then, the information processing apparatus 100 specifies the generated Tracking ID as a Tracking ID associated with a cookie corresponding to communication with the purchase processing apparatus 10.

Further, in the case where the specification process relating to the third example shown in the above described (1-3) is performed, the information processing apparatus 100 performs a process which updates the first association information relating to the third example shown in the above described (3-1-3), and associates and records the generated communication identification information and the generated indirect identification information, with the first association information. At the time when the purchase processing apparatus 10 is accessed the next time, by having the information processing apparatus 100 perform a process which updates the first association information relating to the third example shown in the above described (3-1-3), there will be a high possibility that it becomes possible to specify a Tracking ID by the acquired cookie, by the specification process relating to the first example shown in the above described (1-1).

Further, in step S104, the information processing apparatus 100 may additionally perform a process which records information related to acquired information relating to the first example shown in the above described (3-2-1), and may associate and record the specified Tracking ID and the acquired information related to a purchase. The information processing apparatus 100 acquires information related to a purchase, for example, by extracting information related to a purchase from the URL acquired by access from the purchase processing apparatus 10 in step S102.

FIG. 7 shows an example of a database in which the specified Tracking ID and the acquired information related to a purchase are associated and recorded. The information processing apparatus 100 newly creates the database shown in FIG. 7, for example, or updates the database shown in FIG. 7, for example, by a process which records information related to acquired information relating to the first example shown in the above described (3-2-1).

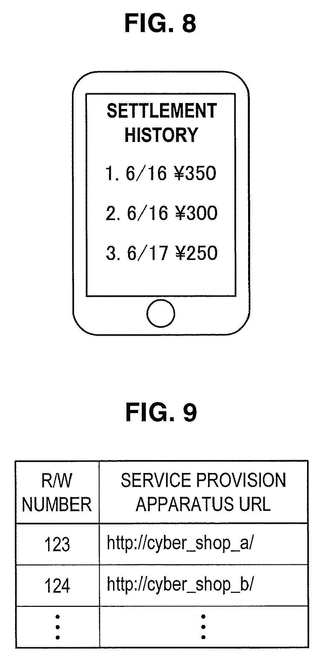

For example, as shown in FIG. 7, by having the specified Tracking ID and the acquired information related to a purchase associated and recorded, it becomes possible to derive information related to various purchases, such as information in which the purchase shop or date are different, for example, by the Tracking ID. Therefore, as shown in FIG. 7, for example, by having the specified Tracking ID and the acquired information related to a purchase associated and recorded, various uses of information related to a purchase can be implemented, such as collectively browsing the details shown by information related to a plurality of purchases such as shown in FIG. 8, for example. Here, FIG. 8 shows an example in which a user causes the details shown by information related to a plurality of purchases, which shows a settlement history of himself or herself, to be displayed as a list, by accessing to the information processing apparatus 100 by using the purchase processing apparatus 10.

When the process of step S104 is performed, the information processing apparatus 100 causes the first information according to the present embodiment, which includes the specified Tracking ID, to be transmitted to the service provision apparatus 200 (S106). Note that, as shown in the process (communication control process) of the above described (2), it is also possible for the information processing apparatus 100 to cause the first information, which includes one or both of information related to a purchase and additional information, to be transmitted to the service provision apparatus 200.

Here, the information processing apparatus 100 specifies the service provision apparatus 200, for example, by using a reader/writer number (hereinafter, shown as an "R/W number") included in the URL acquired by access from the purchase processing apparatus 10 in step S102. Specifically, the information processing apparatus 100 specifies a URL of the service provision apparatus associated with the R/W number included in the acquired URL, for example, by referring to a table or database in which the R/W number and the URL of the service provision apparatus are associated, such as shown in FIG. 9. When including a specific example, in the case where the R/W number included in the URL acquired by access from the purchase processing apparatus 10 in step S102 is "123", the information processing apparatus 100 specifies "http://cyber_shop_a/" as the URL of the service provision apparatus.

Then, the information processing apparatus 100 transmits the first information according to the present embodiment to the service provision apparatus 200, for example, by accessing to the specified URL of the service provision apparatus.

The information processing apparatus 100 performs the processes of steps S104 and S106, such as shown in the above description, for example.

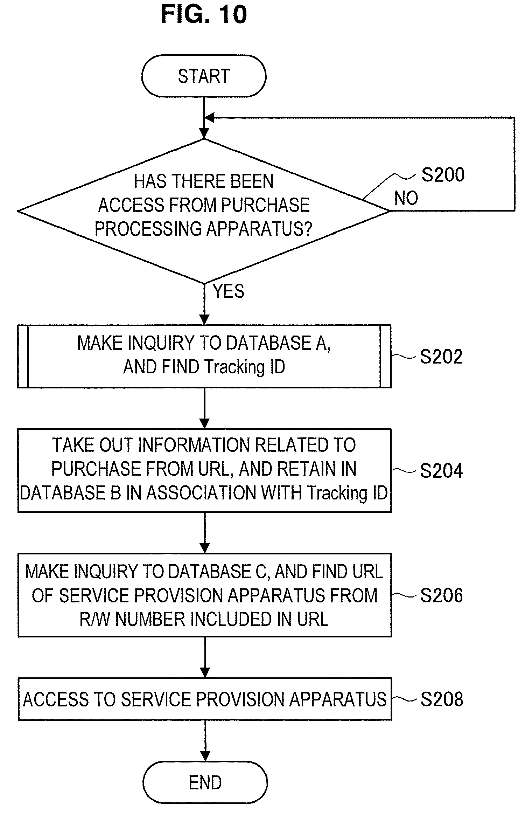

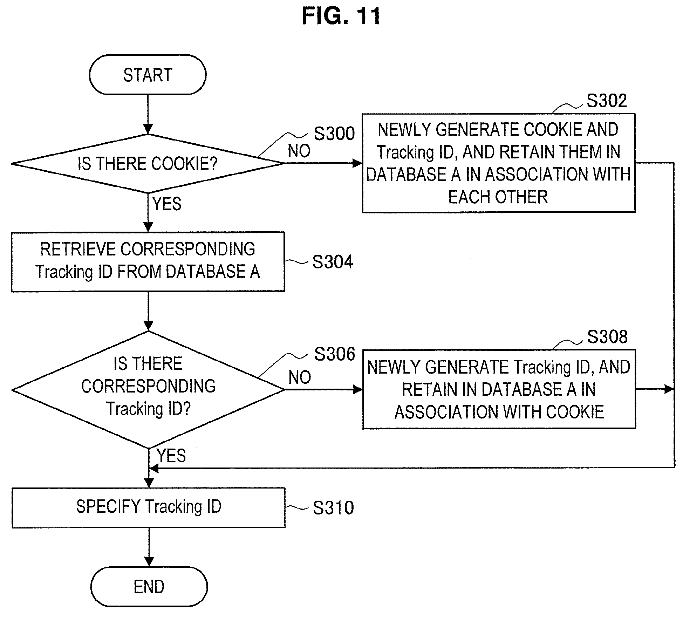

Here, the processes in the information processing apparatus 100, shown in steps S104 and S106 of FIG. 5, will be described by using the flow charts shown in FIG. 10 and FIG. 11. The process of step S202 shown in FIG. 10 corresponds to the process (specification process) of the above described (1), or corresponds to a process of a part of the process of step S104 of FIG. 5. Further, the process of step S204 shown in FIG. 10 corresponds to an example of the process (information management process) of the above described (3), or corresponds to a process of a part of the process of step S104 of FIG. 5. Further, the processes of steps S206 and S208 shown in FIG. 10 correspond to a part of the process (communication control process) of the above described (2), or correspond to the process of step S106 of FIG. 5. Further, the process shown in FIG. 11 corresponds to an example of the process of step S202 shown in FIG. 10.

The information processing apparatus 100 decides whether or not there has been access from the purchase processing apparatus 10 (S200). In the case where it is not decided that there has been access from the purchase processing apparatus 10, the information processing apparatus 100 does not advance the process until it is decided that there has been access from the purchase processing apparatus 10.

Further, in the case where it is decided that there has been access from the purchase processing apparatus 10, the information processing apparatus 100 makes an inquiry to a database A, and finds a Tracking ID corresponding to a cookie relating to communication with the purchase processing apparatus 10 (S202). Here, the database shown in FIG. 6 can be included, for example, as the database A in step S202 (hereinafter, the same will apply).

An example of the process in step S202 will be described by referring to FIG. 11.

The information processing apparatus 100 decides whether or not there is a cookie corresponding to communication with the purchase processing apparatus 10 (S300).

In the case where it is not decided that there is a cookie corresponding to communication with the purchase processing apparatus 10 in step S300, the information processing apparatus 100 newly generates a cookie and a Tracking ID, and retains the generated cookie and Tracking ID in the database A in association with each other (S302). Then, the information processing apparatus 100 specifies the generated Tracking ID as a Tracking ID corresponding to a cookie relating to communication with the purchase processing apparatus 10 (S310). Here, the process of step S302 corresponds to a process which updates the first association information relating to the third example shown in the above described (3-1-3).

Further, in the case where it is decided that there is a cookie corresponding to communication with the purchase processing apparatus 10 in step S300, the information processing apparatus 100 retrieves a Tracking ID corresponding to the cookie from the database A (S304). Then, the information processing apparatus 100 decides whether or not there is a Tracking ID corresponding to the cookie (S306).

In the case where it is decided that there is a Tracking ID corresponding to the cookie in step S306, the information processing apparatus 100 specifies this Tracking ID as a Tracking ID corresponding to a cookie relating to communication with the purchase processing apparatus 10 (S310).

Further, in the case where it is not decided that there is a Tracking ID corresponding to the cookie in step S306, the information processing apparatus 100 newly generates a Tracking ID, and retains the cookie corresponding to the purchase processing apparatus 10 and the generated Tracking ID in the database A in association with each other (S308). Then, the information processing apparatus 100 specifies the generated Tracking ID as a Tracking ID corresponding to a cookie relating to communication with the purchase processing apparatus 10 (S310). Here, the process of step S302 corresponds to a process which updates the first association information relating to the second example shown in the above described (3-1-2).

The information processing apparatus 100 performs the processes shown in FIG. 11, for example, as the process of step S202 shown in FIG. 10.

An example of the processes in the information processing apparatus 100, shown in steps S104 and S106 of FIG. 5, will be described by referring back to FIG. 10. When the process of step S202 is performed, the information processing apparatus 100 takes out information relating to a purchase from the URL relating to access from the purchase processing apparatus 10, and retains this information relating to a purchase, and the Tracking ID found in step S202, in a database B in association with each other (S204). Here, the database shown in FIG. 7 can be included, for example, as the database B in step S204 (hereinafter, the same will apply). Further, the process of step S204 corresponds to a process which records information related to acquired information relating to the first example shown in the above described (3-2-1).

The information processing apparatus 100 makes an inquiry to a database C, and finds a URL of the service provision apparatus, based on an R/W number included in the URL relating to access from the purchase processing apparatus 10 (S206). Here, the database shown in FIG. 9 can be included, for example, as the database C in step S206 (hereinafter, the same will apply).

When the process of step S206 is performed, the information processing apparatus 100 accesses to the service provision apparatus 200, by using the URL found in step S206, and transmits the first information according to the present embodiment to the service provision apparatus 200 (S208).

The information processing apparatus 100 performs the processes shown in FIG. 10, for example, as the processes in the information processing apparatus 100, shown in steps S104 and S106 of FIG. 5.

Note that, the processes in the information processing apparatus 100, shown in steps S104 and S106 of FIG. 5, are not limited to the processes shown in FIG. 10. For example, it is also possible for the information processing apparatus 100 to not perform the process of step S204 shown in FIG. 10.

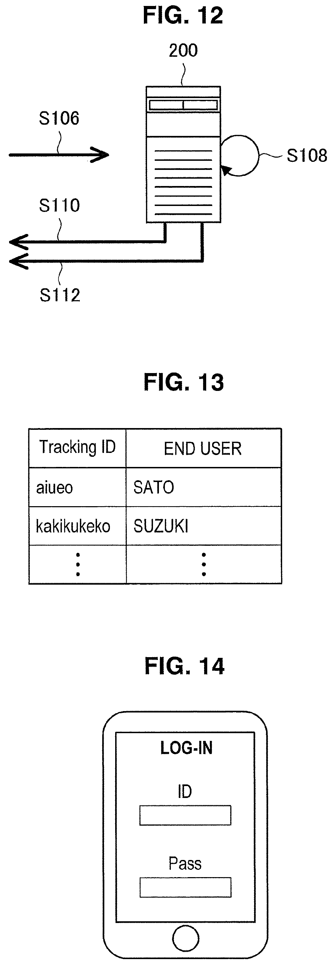

### (iii) Processes in the service provision apparatus 200 (FIG. 12 to FIG. 14)

The service provision apparatus 200 receiving access from the information processing apparatus 100 in step S106 specifies a user corresponding to a Tracking ID, based on the Tracking ID included in the received first information according to the present embodiment (S108).

In step S108, the service provision apparatus 200 performs the process (specification process) shown in the above described (I), for example, by using the second association information according to the present embodiment. FIG. 13 shows an example of the second association information according to the present embodiment. As shown in FIG. 13, a Tracking ID and a user are associated one-to-one in the second association information according to the present embodiment. Here, in the example of the second association information shown in FIG. 13, the "end user" shown in FIG. 13 corresponds to an example of direct identification information according to the present embodiment. Note that, it is needless to say that the second association information according to the present embodiment is not limited to the example shown in FIG. 13.

Further, when the process (specification process) shown in the above described (I) is performed, the service provision apparatus 200 performs the process (execution process) shown in the above described (II).

### {a} First example of the process (execution process) shown in the above described (II): An example of the processes in the case where a user is able to be specified

For example, in the case where a user has been specified by using the second association information according to the present embodiment shown in FIG. 13, the service provision apparatus 200 determines the type, details or the like of a service to be provided to the user, for example, based on a past purchase results and this time purchase results (for example, information related to a purchase to be included in the first information, and a reception of the first information) of the user, and additional information to be included in the first information. Here, a service determination algorithm and determined service details are unique to the service provision apparatus 200, for example.

When the type, details or the like of the service to be provided to the user is determined, the service provision apparatus 200 performs a process related to the service based on the determination details, and causes the second information according to the present embodiment corresponding to the performed process to be transmitted to the information processing apparatus 100 (S110).

Here, "a process which gives points capable of being used by a service provided in the service provision apparatus 200 (for example, points capable of being used in a cyber-shop)", "a process which generates recommendation information related to a product or service purchased in a real space (for example, information which shows an advertisement)" or the like can be included, for example, as a process related to the service performed in the service provision apparatus 200.

Further, "data including data which shows that points capable of being used by a service provided in the service provision apparatus 200 have been given, and generated recommendation information" can be included, for example, as the second information according to the present embodiment transmitted in step S110. Note that, it is needless to say that the example of the second information according to the present embodiment is not limited to that described above.

### {b} Second example of the process (execution process) shown in the above described (II): An example of the processes in the case where a user is not able to be specified

For example, in the case where a user has not been specified by using the second association information according to the present embodiment shown in FIG. 13, the service provision apparatus 200 generates response information which requests a log-in to a service to be provided by the service provision apparatus 200 to the user, for example, and causes the generated response information to be transmitted to the information processing apparatus 100 as the second information according to the present embodiment (S 112).

Here, as shown in FIG. 14, data to display a log-in screen on a display screen (for example, data which constitutes a log-in screen, or data which includes a display command or the like) can be included, for example, as the response information according to the present embodiment. Here, FIG. 14 shows an example in which the purchase processing apparatus 10 receives response information (an example of the second information according to the present embodiment), and the purchase processing apparatus 10 causes a log-in screen to be displayed on a display screen, by the process of step S114, which will be described below. Note that, it is needless to say that the log-in screen on which the response information according to the present embodiment is shown is not limited to the example shown in FIG. 14.

For example, a log-in to a service to be provided by the service provision apparatus 200 is completed, by having a user input information relating to an account (in the example shown in FIG. 14, an ID and password) to a log-in screen such as that shown in FIG. 14. By performing a log-in, the service provision apparatus 200 can specify a user.

When a user is specified, the service provision apparatus 200 associates and records direct identification information corresponding to the specified user, and a Tracking ID acquired by access from the information processing apparatus 100 in step S106, with the second association information according to the present embodiment such as shown in FIG. 13, for example. Then, when the second association information according to the present embodiment is updated, the service provision apparatus 200 performs a process the same as the process (execution process) shown in the above described (II) relating to the first example, shown in the above described {a}, and causes the second information according to the present embodiment corresponding to the performed process to be transmitted to the information processing apparatus 100.

The service provision apparatus 200 performs the processes of steps S108, S110 and S112, such as shown in the above description, for example.

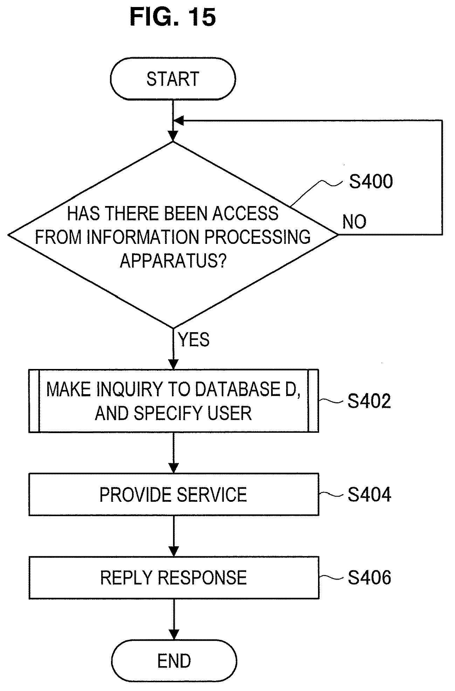

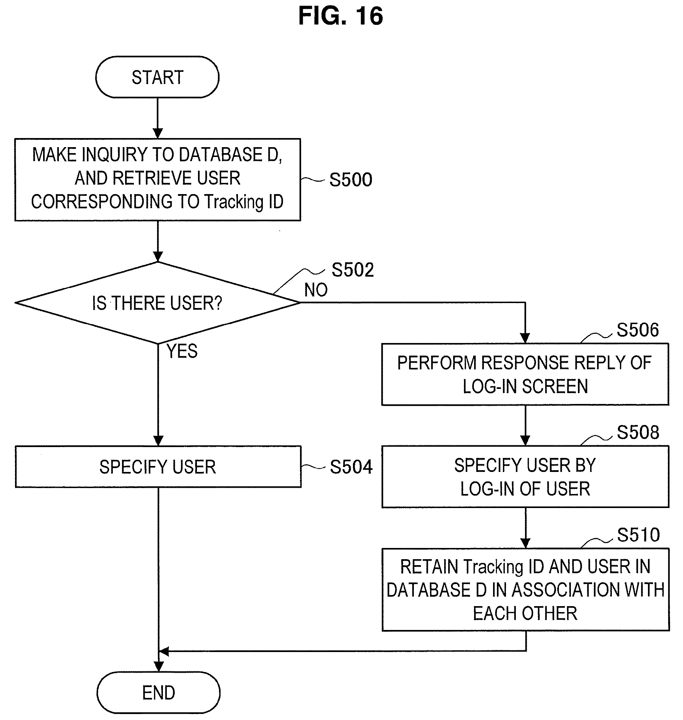

Here, the processes in the service provision apparatus 200, shown in the steps S108, S110 and S112 of FIG. 12, will be described by using the flow charts shown in FIG. 15 and FIG. 16. A part of the process of step S402 shown in FIG. 15 corresponds to the process (specification process) of the above described (I), or corresponds to a process of a part of the process of step S108 of FIG. 12. Further, a part of the process of step S402 shown in FIG. 15, and the processes of steps S404 and S406 shown in FIG. 15, correspond to the process (execution process) of the above described (II), or correspond to a process of a part of the process of step S108 of FIG. 12, and the processes of steps S110 and S 112 of FIG. 12.

The service provision apparatus 200 decides whether or not there has been access from the information processing apparatus 100 (S400). In the case where it is not decided that there has been access from the information processing apparatus 100, the service provision apparatus 200 does not advance the process until it is decided that there has been access from the information processing apparatus 100.

In the case where it is decided that there has been access from the information processing apparatus 100, the service provision apparatus 200 makes an inquiry to a database D, and specifies a user corresponding to a Tracking ID acquired by the information processing apparatus 100 (S402). Here, the database shown in FIG. 13 can be included, for example, as the database D in step S402 (hereinafter, the same will apply).

An example of the process in step S402 will be described by referring to FIG. 16.

The service provision apparatus 200 makes an inquiry to the database D by using the Tracking ID acquired by the information processing apparatus 100, and retrieves a user corresponding to the Tracking ID acquired by the information processing apparatus 100 from the database D (S500).

When the process of step S500 is performed, the service provision apparatus 200 decides whether or not there is a user (S502).

In the case where it is decided that there is a user in step S502, the service provision apparatus 200 specifies the retrieved user as a user corresponding to the Tracking ID acquired by the information processing apparatus 100 (S504).

Further, in the case where it is not decided that there is a user in step S502, the service provision apparatus 200 performs a response reply of a log-in screen (S506).

Further, in the case where a log-in of a user has been performed to the log-in screen, the service provision apparatus 200 specifies a user, based on the log-in of the user (S508). Then, the service provision apparatus 200 retains direct identification information corresponding to the specified user, and the Tracking ID acquired by the information processing apparatus 100, in the database D in association with each other (S510).

The service provision apparatus 200 performs the processes shown in FIG. 16, for example, as the process of step S402 shown in FIG. 15.

An example of the processes in the service provision apparatus 200, shown in steps S108, S110 and S 112 of FIG. 12, will be described by referring back to FIG. 15. When the process of step S402 is performed, the service provision apparatus 200 performs a process related to a service corresponding to the specified user (S404). Then, the service provision apparatus 200 replies the second information according to the present embodiment corresponding to the performed process as a response to the information processing apparatus 100 (S406).

The service provision apparatus 200 performs the processes shown in FIG. 15, for example, as the processes in the service provision apparatus 200, shown in steps S108, S110 and S 112 of FIG. 12.

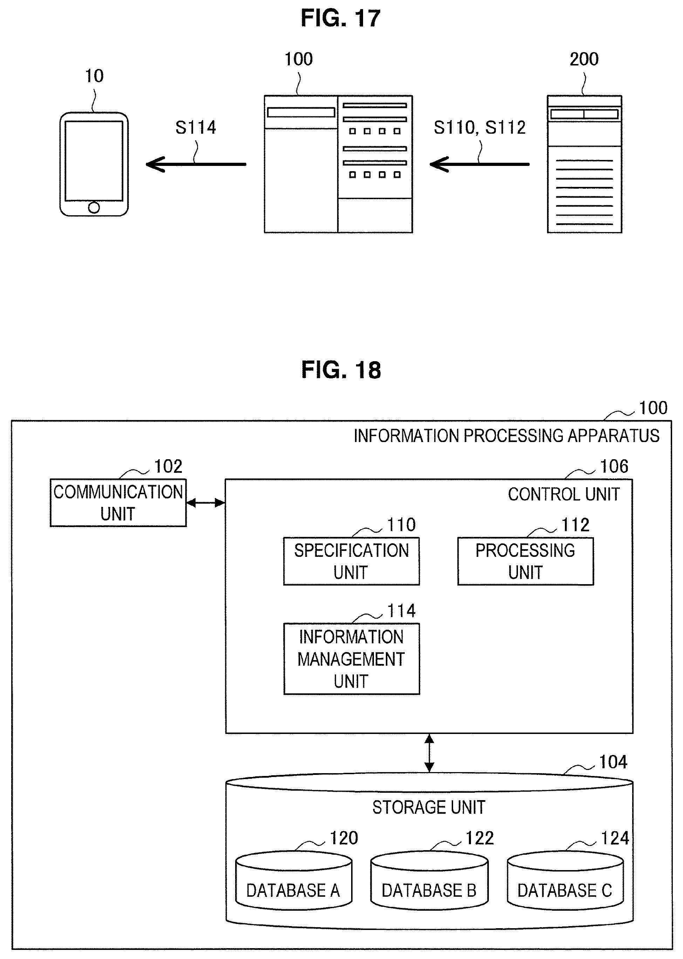

### (iv) Processes in the information processing apparatus 100 (FIG. 17)

The information processing apparatus 100 receiving the second information according to the present embodiment, transmitted from the service provision apparatus 200 in step S110 or step S112, transmits the received second information according to the present embodiment to the purchase processing apparatus 100 which has been accessed in step S102 (S114). That is, the second information according to the present embodiment transmitted in step S 114 corresponds to a response to access from the purchase processing apparatus 10 in step S102, for example. Further, it can be said that the second information according to the present embodiment is information corresponding to a purchase in a real space, such as described above.

When the second information according to the present embodiment transmitted in step S114 is received in the purchase processing apparatus 10, the purchase processing apparatus 10 causes the details of information which shows the service provided in the service provision apparatus 200 such as shown in B of FIG. 1, and a log-in screen such as shown in FIG. 14, included in the second information according to the present embodiment, for example, to be displayed on a display screen.

Further, for example, in the case where a Tracking ID different to the Tracking ID included in the first information transmitted in step S106 (an example of information related to indirect identification information different to the indirect identification information included in the first information) is included in the acquired second information according to the present embodiment, the information processing apparatus 100 updates the first association information, by a process which updates the first association information relating to the first example shown in the above described (3-1-1). For example, as a result of a user being specified by the process (specification process) of the above described (I) in the service provision apparatus 200, in the case where the user has a different Tracking ID (for example, in the case where a new Tracking ID has been issued due to a validity period expiration of a cookie or the like), the different Tracking ID is included in the second information according to the present embodiment.

Here, the information processing apparatus 100 specifies a Tracking ID (an example of indirect identification information according to the present embodiment), by using a cookie (an example of communication identification information according to the present embodiment) corresponding to the purchase processing apparatus 10, in the process (specification process) of the above described (1). Further, in the case where a cookie is not present, or in the case where there is an unknown cookie, the information processing apparatus 100 updates the first association information according to the present embodiment, by newly generating a Tracking ID (or by newly generating an additional cookie), in the process (information management process) of the above described (3). Accordingly, if the cookie is changed, the Tracking ID associated with this cookie will also be changed, even if accessed from the same purchase processing apparatus 10.

Since it is possible for the information processing apparatus 100 to update the first association information, by performing a process which updates the first association information relating to the first example shown in the above described (3-1-1), it is possible to specify access from the purchase processing apparatus 10, even if the cookie has changed such as described above.

For example, cases can be included, as examples, in which a user A uses the information processing system 1000 according to the present embodiment.
* The information processing apparatus 100 generates a cookie A and a Tracking ID A corresponding to the purchase processing apparatus 10 of a user A which has been newly accessed, and records the generated cookie A and Tracking ID A in the first association information according to the present embodiment.
* In the case where a validity period of a cookie has expired, at the timing of a next-time access by the purchase processing apparatus 10 of the user A, the information processing apparatus 100 generates a new cookie B and Tracking ID B, which correspond to the purchase processing apparatus 10 of the user A which has been accessed, and records the generated cookie B and Tracking ID B in the first association information according to the present embodiment. At this time, the information processing apparatus 100 is not able to decide that the Tracking ID A and the Tracking ID B are Tracking IDs corresponding to the purchase processing apparatus 10 of the user A.
* The information processing apparatus 100 causes the first information which includes the Tracking ID B to be transmitted to the service provision apparatus 200.
* Since the service provision apparatus 200 is not able to specify a user by the Tracking ID B, a log-in is requested for the user, and the user is specified by the log-in. As a result of this, in the service provision apparatus 200, it is specified that the specified user is the user A associated with the Tracking ID A.
* The service provision apparatus 200 includes information which shows that "the Tracking ID B and the Tracking ID A are Tracking IDs corresponding to a same user" in the second information according to the present embodiment, and transmits it to the information processing apparatus 100. The service provision apparatus 200 transfers "the Tracking ID B and the Tracking ID A are Tracking IDs corresponding to a same user" to the information processing apparatus 100, for example, by including the Tracking ID A different to the Tracking ID B acquired from the information processing apparatus 100 in the second information.
* By having the information processing apparatus 100 perform a process which updates the first association information relating to the first example shown in the above described (3-1-1), it becomes possible, in the information processing apparatus 100, to decide that the Tracking ID A and the Tracking ID B are Tracking IDs corresponding to the purchase processing apparatus 10 of the user A.

Further, for example, in the case where service information according to the present embodiment is included in the acquired second information according to the present embodiment, the information processing apparatus 100 associates and records the Tracking ID specified in the process (specification process) of the above described (1), the information related to a purchase acquired in step S102, and the service information acquired in step S110, in a database such as that shown in FIG. 7, for example, by a process which records information related to acquired information relating to the second example shown in the above described (3-2-2). Note that, in the case where service information according to the present embodiment, and a recording instruction which records this service information, are included in the acquired second information according to the present embodiment, for example, the information processing apparatus 100 may associate and record the Tracking ID, the information related to a purchase, and the service information.

As described above, by associating and recording a Tracking ID, information relating to a purchase, and service information, a user can confirm together the details of a provided service, at the time when collectively browsing the details shown by information related to a plurality of purchases such as shown in FIG. 8, for example.

In the information processing system 1000 according to the present embodiment, information corresponding to a purchase of a product or service in a real space (the second information according to the present embodiment) is provided to the purchase processing apparatus 10 (an apparatus performing a process relating to the purchase in the real space), for example, by performing processes such as those shown with reference to FIG. 5 to FIG. 17.

Further, the second information according to the present embodiment, which corresponds to information corresponding to a purchase in a real space, may be dynamically changed by the process (execution process) of the above described (II) in the service provision apparatus 200 which constitutes the information processing system 1000. Therefore, a mechanism which dynamically changes a service to be provided is implemented, in association with the purchase product, the price or the like, or by having a past history taken into consideration, for example, by using the information processing system 1000 according to the present embodiment.

Further, as described above, in the information processing system 1000, information corresponding to a purchase in a real space is provided to the purchase processing apparatus 10, by using communication identification information such as a cookie, and indirect identification information such as a Tracking ID. Here, while the indirect identification information according to the present embodiment is data used for identifying a user by the information processing apparatus 100 and the service provision apparatus 200, the user is not directly shown, and so it is not able to be performed, with only the indirect identification information according to the present embodiment, until the user himself or herself is specified. That is, in the information processing apparatus 100, it is not performed until the user himself or herself is specified, even if the information processing apparatus 100 causes information related to a purchase or the like to be stored in a recording medium in association with the indirect identification information, by the process (information management process) of the above described (3). Therefore, by using the information processing system 1000, information corresponding to a purchase in a real space can be provided to the purchase processing apparatus 10, while attempting protection of the privacy of a user.

Further, by using the information processing system 1000, effects such as those described below are accomplished, for example, in each of the apparatuses shown in FIG. 2.

### {Effect in the purchase processing apparatus 10}

By providing information corresponding to a purchase in a real space, a user is entitled to an allotment of points or the like.

### {Effect in the shop side apparatus 20}

Attracting a user with a high intension of purchasing, who is expected to have provided information corresponding to a purchase in a real space such as an allotment of points, and improving sales by a purchase of a product or service by this user, are expected.

Further, since information corresponding to a purchase in a real space is provided to the purchase processing apparatus 10, by performing communication between the purchase processing apparatus 10 and the information processing apparatus 100, it may not be necessary for the shop side apparatus 20 to perform communication with the apparatuses which constitute the information processing system 1000. Accordingly, for example, it is possible for the shop side apparatus 20 to also be applied to an apparatus which does not set a connection (online connection) to a network as a prerequisite, such as a vending machine or the like.

### {Effect in the information processing apparatus 100}

Since it is possible for information related to a purchase (so-called data corresponding to big data) to be stored in a recording medium, by the process (information management process) of the above described (3), the information processing apparatus 100 can use the stored information related to a purchase in data mining. Further, the information processing apparatus 100 can provide a result of data mining to a business operator or the like who manages the service provision apparatus 200 or the shop side apparatus 20. Further, it is also possible for a manager of the information processing apparatus 100 to collect a usage fee or an information fee from the business operator or the like who manages the service provision apparatus 200 or the shop side apparatus 20.

In addition, by storing various types of information in a recording medium, by the process (information management process) of the above described (3), it becomes possible to have a uniform management of a purchase history or the like. Further, uniformly managing a purchase history or the like in the information processing apparatus 100 leads to an improvement of convenience for a user of the purchase processing apparatus 10.

### {Effect in the service provision apparatus 200}

Since a settlement by a purchase in a real space becomes a trigger of access to the service provision apparatus 200 by the purchase processing apparatus 10, it leads to a customer attraction increase to a service provided by the service provision apparatus 200. Further, it is possible for the service provision apparatus 200 to perform giving of recommendations and benefits, on the basis of details shown by information related to a purchase in a real space (for example, a product name or the like purchased in a real space). Therefore, the service provision apparatus 200 can perform giving of recommendations or benefits in which a target is clearer than by Direct Mail (DM) or the like.

Note that, while an example has been shown in the above description in which information (the second information according to the present embodiment) corresponding to a purchase in a real space, which shows an allotment of points or an advertisement by the purchase of a product or service, is provided to the purchase processing apparatus 10 as a use case capable of being applied to the information processing system 1000 according to the present embodiment, the use case capable of being applied to the information processing system 1000 according to the present embodiment is not limited to that described above. By using the information processing system 1000 according to the present embodiment, it is possible to implement user cases such as those shown below, for example.

### * Application example to a stamp rally

After a settlement by a purchase in a real space has been performed, information (an example of the second information according to the second embodiment), which shows a stamp card on which a customer visiting frequency is written, is provided to the purchase processing apparatus 10, by the information processing system 1000 according to the present embodiment, and the purchase processing apparatus 10 causes this stamp card to be displayed on a display screen. Hereinafter, a stamp is collected each time a settlement is performed by a purchase in a shop or the like of a real space corresponding to the stamp card by a user, information which shows the updated stamp card is provided to the purchase processing apparatus 10, and the purchase processing apparatus 10 causes this stamp card to be displayed on a display screen. Therefore, by using the information processing system 1000 according to the present embodiment, a stamp rally is implemented.

Further, by using the information processing system 1000 according to the present embodiment, forgetting to take out the stamp card by a user can be prevented, or a user can visually confirm the process of stamps increasing.

### * Application example to the provision of content data

For example, when a settlement is performed by a purchase of video data, between the shop side apparatus 20, which is a vending machine of video data (data which includes images and audio. An example of content data), and the purchase processing apparatus 10, a browsing URL for browsing a video shown by the purchased video data is handed over to the purchase processing apparatus 10 from the shop side apparatus 20. The purchase processing apparatus 10 accesses to the information processing system 1000 (more strictly speaking, the information processing apparatus 100 such as described above), based on the browsing URL. As a result of this, video data (an example of the second information according to the present embodiment) is provided to the purchase processing apparatus 10, by the information processing system 1000, and the purchase processing apparatus 10 causes a video shown by the video data to be displayed on a display screen. Here, it is possible for the transmission of video data from the information processing system 1000 to the purchase processing apparatus 10 to be performed, for example, by using HTML5 or the like.

By using the information processing system 1000 according to the present embodiment, it can appear as if video data is being transferred to the purchase processing apparatus 10 at the same time as a purchase. Therefore, by using the information processing system 1000, a provision system of content data can be implemented which is easy for a user to intuitively understand. Note that, in a provision system of content data capable of being implemented by using the information processing system 1000, the provided content data is not limited to video data, and various data, such as image data which shows an image or audio data which shows audio, for example, can be used.

### (Configuration examples of the apparatuses which constitute the information processing system 1000 according to the present embodiment)

Next, examples of the configurations of each of the information processing apparatus 100 according to the present embodiment and the service provision apparatus 200 according to the present embodiment, which constitute the information processing system 1000 according to the present embodiment, will be described.

### [I] Information processing apparatus 100

FIG. 18 is a block diagram which shows an example of the configuration of the information processing apparatus 100 according to the present embodiment. The information processing apparatus 100 includes, for example, a communication unit 102, a storage unit 104, and a control unit 106.

The information processing apparatus 100 may include, for example, a read-only memory (ROM; not illustrated), a random access memory (RAM; not illustrated), an operation unit (not illustrated) which a user can operate, and a display unit (not illustrated) which displays various screens on a display screen. In the information processing apparatus 100, for example, the foregoing constituent elements are connected by a bus serving as a data transmission path.

Here, the ROM (not illustrated) stores a program used by the control unit 106 or control data such as arithmetic parameters. The RAM (not illustrated) temporarily stores a program executed by the control unit 106.

An example of the operation unit (not illustrated) includes an operation input device to be described below and an example of the display unit (not illustrated) includes a display device to be described below.

### [Example of hardware configuration of information processing apparatus 100]

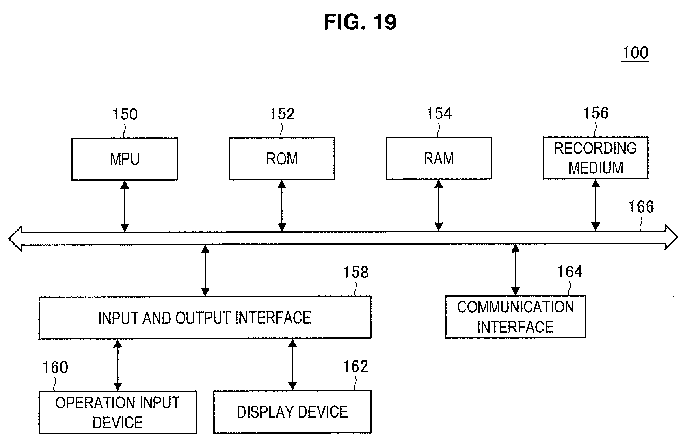

FIG. 19 is an explanatory diagram illustrating an example of a hardware configuration of the information processing apparatus 100 according to the embodiment. The information processing apparatus 100 includes, for example, an MPU 150, a ROM 152, a RAM 154, a recording medium 156, an input and output interface 158, an operation input device 160, a display device 162, and a communication interface 164. In the information processing apparatus 100, for example, the constituent elements are connected by a bus 166 serving as a data transmission path.

The MPU 150 includes, for example, a micro processing unit (MPU) and various processing circuits and functions as the control unit 106 that controls the entire information processing apparatus 100. In the information processing apparatus 100, the MPU 150 serves as, for example, the specification unit 110, the processing unit 112, and the information management unit 114 to be described below.

The ROM 152 stores control data such as calculation parameters and a program used by the MPU 150. The RAM 154 temporarily stores, for example, a program executed by the MPU 150.

The recording medium 156 functions as the storage unit 104 and stores various kinds of data, such as data indicating databases, data indicating tables, and applications. Here, examples of the recording medium 156 include a magnetic recording medium such as a hard disk or a non-volatile memory such as a flash memory. The recording medium 156 may be detachably mounted on the information processing apparatus 100.

The input and output interface 158 connects, for example, the operation input device 160 or the display device 162. The operation input device 160 functions as an operation unit (not illustrated) and the display device 162 functions a display unit (not illustrated). Here, examples of the input and output interface 158 include a Universal Serial Bus (USB) terminal, a Digital Visual Interface (DVI) terminal, a High-Definition Multimedia Interface (HDMI) (registered trademark) terminal, and various processing circuits. For example, the operation input device 160 is included in the information processing apparatus 100 and is connected to the input and output interface 158 in the information processing apparatus 100. Examples of the operation input device 160 include a button, a direction key, a rotation type selector such as a jog dial, and a combination thereof. For example, the display device 162 is included in the information processing apparatus 100 and is connected to the input and output interface 158 in the information processing apparatus 100. Examples of the display device 162 include a liquid crystal display (LCD) and an organic electroluminescence (EL) display (also called an organic light emitting diode (OLED) display).

It is needless to say that the input and output interface 158 can be connected to an external device such as an operation input device (for example, a keyboard or a mouse), a display device, or the like serving as an external device of the information processing apparatus 100. Examples of the display device 162 may be a device through which display and a user's operation are possible, such as a touch screen.

The communication interface 164 is a communication mechanism included in the information processing apparatus 100 and functions as the communication unit 102 that performs wireless/wired communication with an external device such as the service provision apparatus 200 or the purchase processing apparatus 10 via a network (or directly). Here, examples of the communication interface 164 include a communication antenna and a radio frequency (RF) circuit (wireless communication), an IEEE 802.15.1 port and a transmission and reception circuit (wireless communication), an IEEE 802.11 port and a transmission and reception circuit (wireless communication), and a local area network (LAN) terminal and a transmission and reception circuit (wired communication). A network according to the present embodiment includes, for example, a wired network such as LAN and WAN (Wide Area Network), a wireless network such as WLAN (Wireless Local Area Network) and WWAN (Wireless Wide Area Network) via a base station, or an internet using communication protocol such as TCP/IP (Transmission Control Protocol/Internet Protocol).

The information processing apparatus 100 performs the processes in the information processing apparatus 100 (processes relating to an information processing method according to the present embodiment. For example, "the process (specification process) of the above described (1), and the process (communication control process) of the above described (2)", or "the process (specification process) of the above described (1), the process (communication control process) of the above described (2), and the process (information management process) of the above described (3)") shown in the above described [1-2-1], for example, by the configuration shown in FIG. 19. Note that, a hardware configuration of the information processing apparatus 100 according to the present embodiment is not limited to the configuration shown in FIG. 19.

For example, the information processing apparatus 100 may include a plurality of communication interfaces, for example, with different communication systems or the same communication system.

Further, for example, in the case where communication is performed with an external apparatus such as the service provision apparatus 200 or the purchase processing apparatus 10, via an external communication device connected via an input and output interface 158, the information processing apparatus 100 may not include the communication interface 164.

Further, for example, in the case where the information processing apparatus 100 performs the process (information management process) of the above described (3), by setting an external recording medium connected via the input and output interface 158 or the like, or a recording medium included in an external apparatus such as a server, as a recording target, the information processing apparatus 100 may not include the recording medium 156.

The information processing apparatus 100 can be also configured so as not to include, for example, the operation device 160 or the display device 162.

Referring back to FIG. 18, an example of the configuration of the information processing apparatus 100 will be described. The communication unit 102 is a communication mechanism included in the information processing apparatus 100 and performs wired and wireless communication with an external device such as the service provision apparatus 200 or the purchase processing apparatus 10 via a network (or directly). The communication of the communication unit 102 is controlled by, for example, the control unit 106.

Here, examples of the communication unit 102 include a communication antenna and an RF circuit, and a LAN terminal and a transmission and reception circuit. The configuration of the communication unit 102 is not limited to the foregoing configuration. For example, the communication unit 102 can have a configuration corresponding to any standard capable of performing communication, such as a USB terminal and a transmission and reception circuit or any configuration capable of communicating with an external device via a network.

The storage unit 104 is a storage mechanism included in the information processing apparatus 100, and stores various data, such as data which shows a database, data which shows a table, or applications, for example. Here, an example is shown in FIG. 18 in which a database A 120, a database B 122, and a database C 124 are stored in the storage unit 104.

A magnetic recording medium such as a hard disk, a non-volatile memory such as a flash memory or the like can be included, for example, as the storage unit 104. Further, the storage unit 104 may be detachably mounted on the information processing apparatus 100.

The control unit 106 is constituted by an MPU or the like, for example, and serves to control the entire information processing apparatus 100. Further, the control unit 106 includes, for example, a specification unit 110 (an information processing apparatus side specification unit), a processing unit 112 (an information processing apparatus side processing unit), and an information management unit 114, and serves to proactively perform the processes in the information processing apparatus 100 (processes relating to an information processing method according to the present embodiment) shown in the above described [1-2-1].

The specification unit 110 serves to proactively perform the process (specification process) of the above described (1), and in the case where information related to a purchase has been acquired from the purchase processing apparatus 10, specifies indirect identification information associated with communication identification information corresponding to communication with the purchase processing apparatus 10, by using the first association information according to the present embodiment.

The specification unit 110 performs, for example, the specification process relating to the first example shown in the above described (1-1) to the specification process relating to the third example shown in the above described (1-3).

The processing unit 112 serves to proactively perform the process (specification process) of the above described (2). The processing unit 112 causes the first information, which includes indirect identification information specified in the specification unit 110, for example, to be transmitted to the service provision apparatus 200. Further, in the case where the second information according to the present embodiment has been acquired from the service provision apparatus 200, the processing unit 112 causes the second information to be transmitted to the purchase processing apparatus 10.

The information management unit 114 serves to proactively perform the process (information management process) of the above described (3), and selectively performs each of a process which updates association information and a process which records information related to acquired information.

The information management unit 114 performs one or two or more processes, from among the process which updates the first association information relating to the first example shown in the above described (3-1-1) to the process which updates the first association information relating to the fourth example shown in the above described (3-1-4), for example, as a process which updates association information. Further, the information management unit 114 performs one or both of the processes, from among a process which records information related to acquired information relating to the first example shown in the above described (3-2-1), and the process which records information related to acquired information relating to the second example shown in the above described (3-2-2), for example, as a process which records information related to acquired information.

The control unit 106 proactively performs the processes in the information processing apparatus 100 (processes relating to an information processing method according to the present embodiment) shown in the above described [1-2-1], for example, by including the specification unit 110, the processing unit 112, and the information management unit 114.

The information processing apparatus 100 performs the processes in the information processing apparatus 100 (processes relating to an information processing method according to the present embodiment. For example, "the process (specification process) of the above described (1), and the process (communication control process) of the above described (2)", or "the process (specification process) of the above described (1), the process (communication control process) of the above described (2), and the process (information management process) of the above described (3)") shown in the above described [1-2-1], for example, by the configuration shown in FIG. 18.

Therefore, the information processing apparatus 100 can provide information corresponding to a purchase of a product or service in a real space to a purchase processing apparatus performing a process relating to the purchase in the real space, for example, by the configuration shown in FIG. 18.

Further, the information processing apparatus 100 can accomplish the effect accomplished in the above described processes in the information processing system 1000 according to the present embodiment, for example, by the configuration shown in FIG. 18.

Note that, the configuration of the information processing apparatus 100 according to the present embodiment is not limited to the configuration shown in FIG. 18.

For example, the information processing apparatus 100 according to the present embodiment can individually include (for example, implement by individual processing circuits) one or two or more of the specification unit 110, the processing unit 112, and the information management unit 114 shown in FIG. 18, with the control unit 106.

Further, it is also possible for the information processing apparatus 100 according to the present embodiment to take a configuration, for example, which does not include the information management unit 114 shown in FIG. 18. The information processing apparatus 100 according to the present embodiment can perform the process (specification process) of the above described (1) and the process (communication control process) of the above described (2), even if having a configuration which does not include the information management unit 114. Therefore, the information processing apparatus 100 according to the present embodiment can provide information corresponding to a purchase of a product or service in a real space to a purchase processing apparatus performing a process relating to the purchase in the real space, even if having a configuration which does not include the information management unit 114.

Further, for example, in the case where the information processing apparatus 100 according to the present embodiment performs communication with an external apparatus such as the service provision apparatus 200 or the purchase processing apparatus 10 via an external communication device, the information processing apparatus 100 may not include the communication unit 102.

Further, for example, in the case where the information processing apparatus 100 according to the present embodiment performs the process (information management process) of the above described (3), by setting a connected external recording medium, or a recording medium included in an external apparatus such as a server, as a recording target, the information processing apparatus 100 according to the present embodiment may not include the storage unit 104.

### [II] Service provision apparatus 200

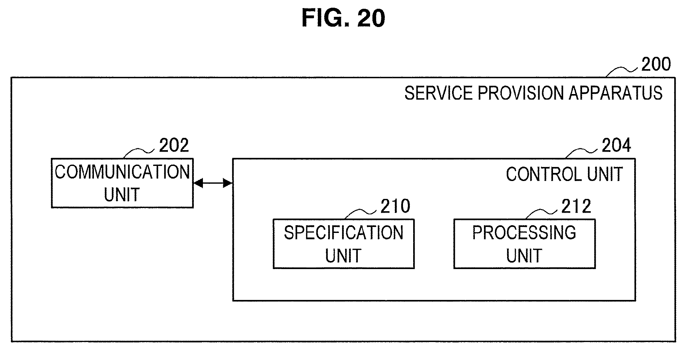

FIG. 20 is a block diagram which shows an example of the configuration of the service provision apparatus 200 according to the present embodiment. The service provision apparatus 200 includes, for example, a communication unit 202, and a control unit 204.

Further, the service provision apparatus 200 may include, for example, a ROM (not illustrated), a RAM (not illustrated), a storage unit (not illustrated), an operation unit capable of being operated by a user (not illustrated), a display unit which displays various screens on a display screen (not illustrated) or the like. The service provision apparatus 200 connects between the each of the above described constituent elements, for example, by a bus as a data transmission path.

The ROM (not illustrated) stores control data such as calculation parameters and a program used by the control unit 204. The RAM (not illustrated) temporarily stores, for example, a program executed by the control unit 204.

The storage unit (not illustrated) is a storage mechanism included in the service provision apparatus 200, and stores various data, such as data relating to a service to be provided, and applications, for example. Here, a magnetic recording medium such as a hard disk, a non-volatile memory such as a flash memory or the like can be included, for example, as the storage unit (not illustrated). Further, the storage unit (not illustrated) may be detachably mounted on the service provision apparatus 200.

An example of the operation unit (not illustrated) includes the above-described operation input device and an example of the display unit (not illustrated) includes the above-described display device.

### [Hardware configuration example of the service provision apparatus 200]

It is possible for the service provision apparatus 200 to take a configuration, for example, the same as that of the hardware configuration example (also including the modified example) of the information processing apparatus 100 shown in FIG. 19. Note that, it is needless to say that the hardware configuration example of the service provision apparatus 200 is not limited to a configuration the same as that of the hardware configuration example of the service provision apparatus 200 shown in FIG. 19.

The communication unit 202 is a communication mechanism included in the service provision apparatus 200, and performs communication wirelessly or by wires with an external apparatus such as the information processing apparatus 100, via a network (or directly). Further, the communication unit 202 has communication controlled, for example, by the control unit 204.

The control unit 204 is constituted by an MPU or the like, for example, and serves to control the entire service provision apparatus 200. Further, the control unit 204 includes, for example, a specification unit 210 (a service provision apparatus side specification unit), and a processing unit 212 (a service provision apparatus side processing unit), and serves to proactively perform the processes in the service provision apparatus 200 shown in the above described [1-2-2].

The specification unit 210 serves to proactively perform the process (specification process) of the above described (I), and specifies a user corresponding to indirect identification information included in the first information acquired from the information processing apparatus 100, by using the second association information according to the present embodiment.

The processing unit 212 serves to proactively perform the process (execution process) of the above described (II). The processing unit 212 performs, for example, a process related to a service corresponding to a user specified in the specification unit 210. Also, the processing unit 212 causes the second information according to the present embodiment corresponding to a process related to the performed service to be transmitted to the information processing apparatus 100.

The control unit 204 proactively performs the processes in the service provision apparatus 200 shown in the above described [1-2-2], for example, by including the specification unit 210 and the processing unit 212.

The service provision apparatus 200 performs the processes in the service provision apparatus 200 (for example, the process (specification process) of the above described (I) and the process (execution process) of the above described (II)) shown in the above described [1-2-2], for example, by the configuration shown in FIG. 20.

Therefore, by the service provision apparatus 200 having the configuration shown in FIG. 20, for example, the information processing system according to the present embodiment is implemented, which is capable of providing information corresponding to a purchase of a product or service in a real space to a purchase processing apparatus performing a process relating to the purchase in the real space.

Further, the service provision apparatus 200 can accomplish the effect accomplished in the above described processes in the information processing system 1000 according to the present embodiment, for example, by the configuration shown in FIG. 20.

Note that, the configuration of the service provision apparatus 200 according to the present embodiment is not limited to the configuration shown in FIG. 20.

For example, the service provision apparatus 200 according to the present embodiment can individually include (for example, implement by individual processing circuits) one or both of the specification unit 210 and the processing unit 212 shown in FIG. 20, with the control unit 204.

Further, for example, in the case where the service provision apparatus 200 according to the present embodiment performs communication with an external apparatus such as the information processing apparatus 100 via an external communication device, the service provision apparatus 200 may not include the communication unit 202.

Heretofore, while a description has been made by including an information processing apparatus as an element which constitutes the information processing system according to the present embodiment, the present embodiment is not limited to such a mode. The present embodiment can be applied to various devices, such as a computer such as a Personal Computer (PC) or a server, for example. Further, the present embodiment can be applied to a processing IC, which is capable of being embedded in a device such as described above, for example.

Heretofore, while a description has been made by including a service provision apparatus as an element which constitutes the information processing system according to the present embodiment, the present embodiment is not limited to such a mode. The present embodiment can be applied to various devices, such as a computer such as a PC or a server, for example. Further, the present embodiment can be applied to a processing IC, which is capable of being embedded in a device such as described above, for example.

Further, while a description has been made by including a purchase processing apparatus as the present embodiment, the present embodiment is not limited to such a mode. The present embodiment can be applied to various devices, such as a computer such as a PC, a tablet-type apparatus, a communication apparatus such as a mobile phone or a smartphone, a video/music reproduction apparatus (or a video/music recording and reproduction apparatus), or a game device, for example. Further, the present embodiment can be applied to a processing IC, which is capable of being embedded in a device such as described above, for example. Further, the purchase processing apparatus according to the present embodiment may constitute the information processing system according to the present embodiment.

Further, while a description has been made by including a shop side apparatus as the present embodiment, the present embodiment is not limited to such a mode. The present embodiment can be applied to various devices, such as a POS apparatus, a computer such as a PC, or a vending machine, for example. Further, the present embodiment can be applied to a processing IC, which is capable of being embedded in a device such as described above, for example. Further, the shop side apparatus according to the present embodiment may constitute the information processing system according to the present embodiment.

Further, the processes in the information processing apparatus 100 (processes relating to an information processing method according to the present embodiment) shown in the above described [1-2-1] in the information processing system according to the present embodiment may be implemented by a system constituted from a plurality of apparatuses, as a prerequisite to connecting to a network (or communicating with each apparatus), such as cloud computing or the like, for example.

Further, the processes in the service provision apparatus 200 shown in the above described [1-2-2] in the information processing system according to the present embodiment may be implemented by a system constituted from a plurality of apparatuses, as a prerequisite to connecting to a network (or communicating with each apparatus), such as cloud computing or the like, for example.

### (The program according to the present embodiment)

Information corresponding to a purchase of a product or service in a real space can be provided to a purchase processing apparatus performing a process relating to the purchase in the real space, by having a program (for example, a program capable of executing the processes in the information processing apparatus 100 (processes relating to an information processing method according to the present embodiment) shown in the above described [1-2-1], such as "the process (specification process) of the above described (1), and the process (communication control process) of the above described (2)", or "the process (specification process) of the above described (1), the process (communication control process) of the above described (2), and the process (information management process) of the above described (3)") executed in a computer, the program causing the computer to function as the information processing apparatus according to the present embodiment.

Further, an information processing system is implemented capable of providing information corresponding to a purchase of a product or service in a real space to a purchase processing apparatus performing a process relating to the purchase in the real space, by having a program (for example, a program capable of executing the processes in the service provision apparatus 200 shown in the above described [1-2-2], such as the process (specification process) of the above described (I), and the process (execution process) of the above described (II)) executed in a computer, the program causing the computer to function as the service provision apparatus according to the present embodiment.

It should be understood by those skilled in the art that various modifications, combinations, sub-combinations and alterations may occur depending on design requirements and other factors insofar as they are within the scope of the appended claims or the equivalents thereof.

For example, while the above description has shown providing a program (computer program) for causing a computer to function as the information processing apparatus according to the present embodiment, and a program (computer program) for causing a computer to function as the service apparatus according to the present embodiment, the present embodiment can be additionally provided together with recording mediums respectively causing the above described programs to be stored, or a recording medium causing the above described programs to be stored together.

The above-described configuration is an example of the embodiment and, of course, pertains to the technical scope of an embodiment of the present disclosure.

Additionally, the present technology may also be configured as below.

### (1)

An information processing apparatus including:
a specification unit, in a case where information related to a purchase of a product or service in a real space has been acquired from a purchase processing apparatus performing a process relating to the purchase, which specifies indirect identification information associated with communication identification information corresponding to communication with the purchase processing apparatus by using association information in which the communication identification information identifying communication and the indirect identification information indirectly showing a user are associated; and
a processing unit which causes first information including the specified indirect identification information to be transmitted to a service provision apparatus providing a service in a virtual space,
wherein, in a case where second information corresponding to a process for the transmitted first information has been acquired from the service provision apparatus, the processing unit causes the second information to be transmitted to the purchase processing apparatus.

### (2)

The information processing apparatus according to (1), further including:
an information management unit which selectively performs each of a process which updates the association information and a process which records information related to acquired information.

### (3)

The information processing apparatus according to (2),
wherein, in a case where information related to the indirect identification information different to the indirect identification information included in the transmitted first information is included in the second information, the information management unit updates the association information.

### (4)

The information processing apparatus according to (3),
wherein the information management unit associates the indirect identification information that is included in the association information and included in the transmitted first information, with the different indirect identification information.

### (5)

The information processing apparatus according to any one of (2) to (4),
wherein the information management unit associates and records the specified indirect identification information and the information related to the purchase.

### (6)

The information processing apparatus according to (5),
wherein, in a case where service information corresponding to a result of a process relating to a service in the service provision apparatus is included in the second information,
the information management unit associates and records the specified indirect identification information, the information related to the purchase, and the service information.

### (7)

The information processing apparatus according to any one of (2) to (6),
wherein, in a case where a validity period is provided in the communication identification information included in the association information,
the information management unit makes invalid the communication identification information for which a validity period has expired and which is included in the association information, and the indirect identification information associated with the communication identification information for which a validity period has expired.

### (8)

The information processing apparatus according to any one of (2) to (7), wherein the specification unit,
in a case where the communication identification information has been acquired together with the information related to the purchase from the purchase processing apparatus, retrieves the communication identification information matching with the acquired communication identification information from the association information, and
in a case where the communication identification information matching with the acquired communication identification information has not been retrieved from the association information, newly generates the indirect identification information, and
wherein the information management unit associates and records the acquired communication identification information and the generated indirect identification information with the association information.

### (9)

The information processing apparatus according to any one of (2) to (8),
wherein the specification unit, in a case where the communication identification information has not been acquired together with the information related to the purchase from the purchase processing apparatus, newly generates the communication identification information and the indirect identification information, and
wherein the information management unit associates and records the generated communication identification information and the generated indirect identification information with the association information.

### (10)

The information processing apparatus according to any one of (1) to (9), wherein the specification unit,
in a case where the communication identification information has been acquired together with the information related to the purchase from the purchase processing apparatus, retrieves the communication identification information matching with the acquired communication identification information from the association information, and
in a case where the communication identification information matching with the acquired communication identification information has been retrieved from the association information, specifies the indirect identification information associated with the retrieved communication identification information as the indirect identification information associated with communication identification information corresponding to communication with the purchase processing apparatus.

### (11)

The information processing apparatus according to (10),
wherein the specification unit,
in a case where the communication identification information matching with the acquired communication identification information has not been retrieved from the association information, newly generates the indirect identification information, and
specifies the generated indirect identification information as the indirect identification information associated with communication identification information corresponding to communication with the purchase processing apparatus.

### (12)

The information processing apparatus according to any one of (1) to (11), wherein the specification unit,
in a case where the communication identification information has not been acquired together with the information related to the purchase from the purchase processing apparatus, newly generates the communication identification information and the indirect identification information, and
specifies the generated indirect identification information as the indirect identification information associated with communication identification information corresponding to communication with the purchase processing apparatus.

### (13)

The information processing apparatus according to (12),
wherein, in a case of causing the second information to be transmitted to the purchase processing apparatus, the processing unit causes the generated communication identification information to be transmitted to the purchase processing apparatus.

### (14)

The information processing apparatus according to any one of (1) to (13),
wherein the processing unit causes the first information further including the information related to the purchase to be transmitted to the service provision apparatus.

### (15)

The information processing apparatus according to any one of (1) to (14),
wherein, in a case where additional information has been acquired together with the information related to the purchase from the purchase processing apparatus,
the processing unit causes the first information further including the additional information to be transmitted to the service provision apparatus.

### (16)

The information processing apparatus according to any one of (1) to (15),
wherein the communication identification information is a cookie.

### (17)

An information processing method including:
a step, in a case where information related to a purchase of a product or service in a real space has been acquired from a purchase processing apparatus performing a process relating to the purchase, which specifies indirect identification information associated with communication identification information corresponding to communication with the purchase processing apparatus by using association information in which the communication identification information identifying communication and the indirect identification information indirectly showing a user are associated;
a step which causes first information including the specified indirect identification information to be transmitted to a service provision apparatus providing a service in a virtual space, and
a step, in a case where second information corresponding to a process for the transmitted first information has been acquired from the service provision apparatus, which causes the second information to be transmitted to the purchase processing apparatus.

### (18)

A program for causing a computer to execute:
a step, in a case where information related to a purchase of a product or service in a real space has been acquired from a purchase processing apparatus performing a process relating to the purchase, which specifies indirect identification information associated with communication identification information corresponding to communication with the purchase processing apparatus by using association information in which the communication identification information identifying communication and the indirect identification information indirectly showing a user are associated;
a step which causes first information including the specified indirect identification information to be transmitted to a service provision apparatus providing a service in a virtual space, and
a step, in a case where second information corresponding to a process for the transmitted first information has been acquired from the service provision apparatus, which causes the second information to be transmitted to the purchase processing apparatus.

### (19)

An information processing system including:
an information processing apparatus; and
a service provision apparatus which provides a service in a virtual space,
   wherein the information processing apparatus includes
   an information processing apparatus side specification unit, in a case where information related to a purchase of a product or service in a real space has been acquired from a purchase processing apparatus performing a process relating to the purchase, which specifies indirect identification information associated with communication identification information corresponding to communication with the purchase processing apparatus by using first association information in which the communication identification information identifying communication and the indirect identification information indirectly showing a user are associated, and
   an information processing apparatus side processing unit which causes first information including the specified indirect identification information to be transmitted to the service provision apparatus,
wherein, in a case where second information corresponding to a process for the transmitted first information has been acquired from the service provision apparatus, the information processing apparatus side processing unit causes the second information to be transmitted to the purchase processing apparatus, and
   wherein the service provision apparatus includes
   a service provision apparatus side specification unit which specifies a user corresponding to the indirect identification information included in the first information by using second association information in which the indirect identification information and direct identification information directly showing a user are associated, and
   a service provision apparatus side processing unit which performs a process related to a service corresponding to the specified user, and causes the second information corresponding to the process to be transmitted to the information processing apparatus.

### Reference Signs List

- 10: purchase processing apparatus
- 20: shop side apparatus
- 100: information processing apparatus
- 102, 202: communication unit
- 104: storage unit
- 106, 204: control unit
- 110, 210: specification unit
- 112, 212: processing unit
- 114: information management unit
- 1000: information processing system

## Claims

1. An information processing apparatus comprising:
a specification unit, in a case where information related to a purchase of a product or service in a real space has been acquired from a purchase processing apparatus performing a process relating to the purchase, which specifies indirect identification information associated with communication identification information corresponding to communication with the purchase processing apparatus by using association information in which the communication identification information identifying communication and the indirect identification information indirectly showing a user are associated; and
a processing unit which causes first information including the specified indirect identification information to be transmitted to a service provision apparatus providing a service in a virtual space,
wherein, in a case where second information corresponding to a process for the transmitted first information has been acquired from the service provision apparatus, the processing unit causes the second information to be transmitted to the purchase processing apparatus.

2. The information processing apparatus according to claim 1, further comprising:
an information management unit which selectively performs each of a process which updates the association information and a process which records information related to acquired information.

3. The information processing apparatus according to claim 2,
wherein, in a case where information related to the indirect identification information different to the indirect identification information included in the transmitted first information is included in the second information, the information management unit updates the association information.

4. The information processing apparatus according to claim 3,
wherein the information management unit associates the indirect identification information that is included in the association information and included in the transmitted first information, with the different indirect identification information.

5. The information processing apparatus according to claim 2,
wherein the information management unit associates and records the specified indirect identification information and the information related to the purchase.

6. The information processing apparatus according to claim 5, wherein, in a case where service information corresponding to a result of a process relating to a service in the service provision apparatus is included in the second information,
the information management unit associates and records the specified indirect identification information, the information related to the purchase, and the service information.

7. The information processing apparatus according to claim 2,
wherein, in a case where a validity period is provided in the communication identification information included in the association information,
the information management unit makes invalid the communication identification information for which a validity period has expired and which is included in the association information, and the indirect identification information associated with the communication identification information for which a validity period has expired.

8. The information processing apparatus according to claim 2,
wherein the specification unit,
in a case where the communication identification information has been acquired together with the information related to the purchase from the purchase processing apparatus, retrieves the communication identification information matching with the acquired communication identification information from the association information, and
in a case where the communication identification information matching with the acquired communication identification information has not been retrieved from the association information, newly generates the indirect identification information, and
wherein the information management unit associates and records the acquired communication identification information and the generated indirect identification information with the association information.

9. The information processing apparatus according to claim 2,
wherein the specification unit, in a case where the communication identification information has not been acquired together with the information related to the purchase from the purchase processing apparatus, newly generates the communication identification information and the indirect identification information,
and
wherein the information management unit associates and records the generated communication identification information and the generated indirect identification information with the association information.

10. The information processing apparatus according to claim 1,
wherein the specification unit,
in a case where the communication identification information has been acquired together with the information related to the purchase from the purchase processing apparatus, retrieves the communication identification information matching with the acquired communication identification information from the association information, and
in a case where the communication identification information matching with the acquired communication identification information has been retrieved from the association information, specifies the indirect identification information associated with the retrieved communication identification information as the indirect identification information associated with communication identification information corresponding to communication with the purchase processing apparatus.

11. The information processing apparatus according to claim 10,
wherein the specification unit,
in a case where the communication identification information matching with the acquired communication identification information has not been retrieved from the association information, newly generates the indirect identification information, and
specifies the generated indirect identification information as the indirect identification information associated with communication identification information corresponding to communication with the purchase processing apparatus.

12. The information processing apparatus according to claim 1,
wherein the specification unit,
in a case where the communication identification information has not been acquired together with the information related to the purchase from the purchase processing apparatus, newly generates the communication identification information and the indirect identification information, and
specifies the generated indirect identification information as the indirect identification information associated with communication identification information corresponding to communication with the purchase processing apparatus.

13. The information processing apparatus according to claim 12,
wherein, in a case of causing the second information to be transmitted to the purchase processing apparatus, the processing unit causes the generated communication identification information to be transmitted to the purchase processing apparatus.

14. The information processing apparatus according to claim 1,
wherein the processing unit causes the first information further including the information related to the purchase to be transmitted to the service provision apparatus.

15. The information processing apparatus according to claim 1,
wherein, in a case where additional information has been acquired together with the information related to the purchase from the purchase processing apparatus,
the processing unit causes the first information further including the additional information to be transmitted to the service provision apparatus.

16. The information processing apparatus according to claim 1,
wherein the communication identification information is a cookie.

17. An information processing method comprising:
a step, in a case where information related to a purchase of a product or service in a real space has been acquired from a purchase processing apparatus performing a process relating to the purchase, which specifies indirect identification information associated with communication identification information corresponding to communication with the purchase processing apparatus by using association information in which the communication identification information identifying communication and the indirect identification information indirectly showing a user are associated;
a step which causes first information including the specified indirect identification information to be transmitted to a service provision apparatus providing a service in a virtual space, and
a step, in a case where second information corresponding to a process for the transmitted first information has been acquired from the service provision apparatus, which causes the second information to be transmitted to the purchase processing apparatus.

18. A program for causing a computer to execute:
a step, in a case where information related to a purchase of a product or service in a real space has been acquired from a purchase processing apparatus performing a process relating to the purchase, which specifies indirect identification information associated with communication identification information corresponding to communication with the purchase processing apparatus by using association information in which the communication identification information identifying communication and the indirect identification information indirectly showing a user are associated;
a step which causes first information including the specified indirect identification information to be transmitted to a service provision apparatus providing a service in a virtual space, and
a step, in a case where second information corresponding to a process for the transmitted first information has been acquired from the service provision apparatus, which causes the second information to be transmitted to the purchase processing apparatus.

19. An information processing system comprising:
an information processing apparatus; and
a service provision apparatus which provides a service in a virtual space,
wherein the information processing apparatus includes
an information processing apparatus side specification unit, in a case where information related to a purchase of a product or service in a real space has been acquired from a purchase processing apparatus perfoiming a process relating to the purchase, which specifies indirect identification information associated with communication identification information corresponding to communication with the purchase processing apparatus by using first association information in which the communication identification information identifying communication and the indirect identification information indirectly showing a user are associated, and
an information processing apparatus side processing unit which causes first information including the specified indirect identification information to be transmitted to the service provision apparatus,
wherein, in a case where second information corresponding to a process for the transmitted first information has been acquired from the service provision apparatus, the information processing apparatus side processing unit causes the second information to be transmitted to the purchase processing apparatus, and
wherein the service provision apparatus includes
a service provision apparatus side specification unit which specifies a user corresponding to the indirect identification information included in the first information by using second association information in which the indirect identification information and direct identification information directly showing a user are associated, and
a service provision apparatus side processing unit which performs a process related to a service corresponding to the specified user, and causes the second information corresponding to the process to be transmitted to the information processing apparatus.
